# EUROPEAN PATENT APPLICATION

(11) **EP 4 778 615 A1**
(43) Date of publication of application: **22.07.2026**
(21) Application number: 24864128.4
(22) Date of filing: 03.06.2024
(51) Int. Cl.: B01D 53/26, B01D 53/04, C25B 1/04, C25B 15/08

(54) **HYDROGEN DRYING SYSTEM FOR HYDROGEN PRODUCTION USING RENEWABLE ENERGY**

(30) Priority: 12.09.2023 CN 202311174725
(71) Applicant: Changchun Green Drive Hydrogen Technology Co., Ltd., Changchun, Jilin 130102 (CN)
(72) Inventor: BI, Jun, Changchun, Jilin 130102 (CN); LI, Yuzhe, Changchun, Jilin 130102 (CN); ZHANG, Zhengxi, Changchun, Jilin 130102 (CN); GUO, Chun, Changchun, Jilin 130102 (CN); WANG, Yutao, Changchun, Jilin 130102 (CN); GAO, Yunke, Changchun, Jilin 130102 (CN); AN, Xu, Changchun, Jilin 130102 (CN); LIN, Mu, Changchun, Jilin 130102 (CN); ZHAO, Zhidan, Changchun, Jilin 130102 (CN); ZHAO, Yufeng, Changchun, Jilin 130102 (CN); MEI, Wu, Changchun, Jilin 130102 (CN)
(74) Representative: Tranvouez, Edern Morgan
(86) International application number: PCT/CN2024/097109
(87) International publication number: WO 2025/055403

(57) **Abstract**

A hydrogen drying system for hydrogen production using renewable energy is provided. Two adsorbers (1, 2) are arranged in parallel, the two adsorbers (1, 2) alternately perform an adsorption process and a desorption process, the adsorption flow of each of the adsorbers (1, 2) changes along with the fluctuation of input renewable energy, and an operating state of each of the adsorbers (1, 2) is switched by means of accumulating the hydrogen flow treated by each of the adsorbers (1, 2) in a single adsorption process; a pre-adsorber (3) is connected in series to one of the adsorbers (1, 2) and is used for assisting in the desorption process; and in the desorption process, hydrogen in the pre-adsorber (3) or the adsorbers (1, 2) is circulated by means of a hydrogen self-circulation apparatus (4), and the desorption process is independent of the adsorption process. Since the adsorption process and the desorption process are independent of each other, after a raw gas enters the adsorbers (1, 2) and absorption is completed, all the raw gas is output; and in the desorption process, hydrogen in the pre-adsorber (3) or the adsorbers (1, 2) is circulated through the hydrogen self-circulation apparatus (4) to achieve hydrogen regeneration, so that the problem of incomplete desorption due to desorption interruption caused by the flow fluctuation of the raw hydrogen is solved, intermittent and fluctuating renewable energy can be matched to perform hydrogen production, and an operating flow range of 0-100% can be achieved.

## Description

This disclosure claims priority to patent application No. 202311174725.8, entitled "Hydrogen Drying System for Hydrogen Production Using Renewable Energy" filed with the China National Intellectual Property Administration on September 12, 2023.

### Technical Field

This disclosure relates to the technical field of hydrogen production using electrolyzed water, specifically to a hydrogen drying system for hydrogen production using renewable energy.

### Background

Hydrogen energy has become an important component of the future energy system in China. The hydrogen production using renewable energy is a main development direction in the future. The hydrogen energy is widely used in energy storage, metallurgy, chemical industry, transportation and other fields. The existing raw hydrogen for hydrogen production using renewable energy is generally dried by temperature swing adsorption. To avoid the loss of regenerated hydrogen, three tower adsorbers are generally used for cyclic adsorption.

Most of the hydrogen drying devices in a related art require continuous supply of raw hydrogen to ensure that an adsorbent in an adsorber can continuously perform high-temperature desorption until complete desorption before entering the next adsorption cycle. There are certain requirements for the flow of the raw gas during desorption of the adsorbent in the adsorber, and an excessively low flow may lead to incomplete desorption. When the renewable energy is matched for hydrogen production, once a front-end power supply is unstable, it may cause an intermittent or relatively large range fluctuation in production of raw hydrogen, and the fluctuation or interruption of the raw hydrogen is difficult to ensure that the adsorbent inside the adsorber can perform complete desorption, resulting in the inability to output dried hydrogen after entering the next adsorption cycle. Moreover, most of the adsorbers in the related art are switched periodically, and when the renewable energy is matched for hydrogen production, the adsorber is subjected to regeneration before adsorption saturation, which leads to frequent heating desorption in a desorption stage to some extent, resulting in energy loss. Therefore, it is necessary to design a hydrogen drying system suitable for intermittent and fluctuating conditions.

### Summary

This disclosure provides a hydrogen drying system for hydrogen production using renewable energy to reduce the heating desorption frequency, reduce the energy consumption and ensure desorption and drying effects.

In order to achieve the above objectives, this disclosure provides a hydrogen drying system for hydrogen production using renewable energy, including two adsorbers, a pre-adsorber, a hydrogen self-circulation apparatus, a desorption heater, a desorption cooler and a desorption gas-water separator, wherein the two adsorbers are arranged in parallel, the two adsorbers alternately perform an adsorption process and a desorption process, an adsorption flow of each of the two adsorbers changes along with the fluctuations of input renewable energy, and an operating state of the each of the two adsorbers is switched by means of accumulating a hydrogen flow treated by the each of the two adsorbers in a single adsorption process; the pre-adsorber is connected in series to one of the two adsorbers and is used for assisting in the desorption process; in the desorption process, hydrogen in the pre-adsorber or the one of the two adsorbers is circulated through the hydrogen self-circulation apparatus, the desorption process is independent of the adsorption process, and after the adsorption process is completed, dried hydrogen is directly output; the desorption heater is connected to an outlet of the hydrogen self-circulation apparatus to heat a hydrogen output from the hydrogen self-circulation apparatus; and an inlet of the desorption cooler is connected to the each of the two adsorbers or the pre-adsorber and an outlet of the desorption cooler is connected to the desorption gas-water separator to condense water vapor carried in hydrogen in the desorption process, hydrogen and liquid water are separated by the desorption gas-water separator, and a hydrogen outlet of the desorption gas-water separator is connected to the adsorbers or the pre-adsorber.

Further, the two adsorbers are respectively a first adsorber and a second adsorber, an inlet of the first adsorber is connected to a raw hydrogen inlet through a first adsorption intake automatic valve, the inlet of the first adsorber is connected to the pre-adsorber through a first desorption exhaust automatic valve and a pre-adsorption intake automatic valve arranged sequentially, an outlet of the first adsorber is connected with a first adsorption exhaust automatic valve for discharging hydrogen, and the outlet of the first adsorber is connected to the hydrogen self-circulation apparatus and the pre-adsorber through a first desorption intake automatic valve and a first pre-adsorption exhaust automatic valve arranged sequentially; an inlet of the second adsorber is connected to the raw hydrogen inlet through a second adsorption intake automatic valve, the inlet of the second adsorber is connected to the desorption cooler through a second desorption exhaust automatic valve and an adsorber desorption exhaust automatic switching valve arranged sequentially, an outlet of the second adsorber is connected with a second adsorption exhaust automatic valve for discharging hydrogen, and the outlet of the second adsorber is connected to the desorption heater through a second desorption intake automatic valve and an adsorber desorption intake automatic switching valve arranged sequentially; the two adsorbers share one pre-adsorption intake automatic valve, one pre-adsorption exhaust automatic valve, one adsorber desorption intake automatic switching valve and one adsorber desorption exhaust automatic switching valve; and the outlet of the first adsorber is connected to a first pressure transmitter, and the outlet of the second adsorber is connected to a second pressure transmitter.

Further, an inlet of the pre-adsorber is connected to the pre-adsorption intake automatic valve through a pre-adsorption intake automatic switching valve, the inlet of the pre-adsorber is connected to the desorption cooler through a desorption exhaust automatic switching valve, an outlet of the pre-adsorber is connected to an external pressurization inlet through a desorption intake automatic switching valve, the outlet of the pre-adsorber is connected to the hydrogen self-circulation apparatus and the pre-adsorption exhaust automatic valve through a pre-adsorption exhaust automatic switching valve, and the outlet of the pre-adsorber is connected to a third pressure transmitter.

Further, an inlet of the hydrogen self-circulation apparatus is connected to the pre-adsorber or the each of the two adsorbers, the hydrogen self-circulation apparatus includes multiple sets of self-circulation units, and when an operating flow of a single set of the self-circulation unit does not meet a desorption flow demand, the multiple sets of the self-circulation units operate in parallel; and each set of the self-circulation unit includes a self-circulation inlet shut-off valve, a self-circulation device, a self-circulation outlet non-return valve and a self-circulation outlet shut-off valve connected sequentially.

Further, the hydrogen drying system for hydrogen production using renewable energy further includes a raw hydrogen inlet, a product hydrogen outlet, a hydrogen vent, a cooling water outlet, a cooling water inlet, a drain outlet, an external pressurization inlet and a water collector, wherein the raw hydrogen inlet is connected to an inlet of the adsorber, the product hydrogen outlet is connected to an outlet of the adsorber through a product hydrogen automatic valve, the hydrogen vent is connected to the outlet of the adsorber through a hydrogen venting automatic valve, a self-operated pressure adjusting valve, a hydrogen flowmeter and a hydrogen dew point instrument are arranged on a pipeline where the adsorber is connected to the product hydrogen outlet, the cooling water inlet and the cooling water outlet are both connected to the desorption cooler, the external pressurization inlet is connected to the two adsorbers and the pre-adsorber through an external pressurization automatic valve, a liquid outlet of the desorption gas-water separator is connected to an inlet of the water collector through a liquid outlet automatic valve, and an9 outlet of the water collector is connected to the drain outlet through a drain automatic valve.

Further, the desorption process includes a pressurization stage, a desorption stage, a pre-adsorption stage, a waiting stage and a pressure replenishment stage, and a pre-adsorption process of the pre-adsorber includes a pressurization stage, a pre-adsorption stage, a desorption stage, a pressure replenishment stage and a waiting stage; the two adsorbers are respectively a first adsorber and a second adsorber, the first adsorber is an adsorption process A1, and the second adsorber is a desorption process D, forming an A1D state; the second adsorber is an adsorption process A2, and the first adsorber is a desorption process D, forming an A2D state; the pressurization stage of each of the two adsorbers corresponds to the pressurization stage of the pre-adsorber, forming a D1 stage; the desorption stage of the each of the two adsorbers corresponds to the adsorption stage of the pre-adsorber, forming a D2 stage; the pre-adsorption stage of the adsorber corresponds to the desorption stage of the pre-adsorber, forming a D3 stage; the pressure replenishment stage of the each of the two adsorbers corresponds to the pressure replenishment stage of the pre-adsorber, forming a D4 stage; the waiting stage of the each of the two adsorbers corresponds to the waiting stage of the pre-adsorber, forming a D5 stage; and operating state combinations of the two adsorbers and the pre-adsorber are divided into A1D1, A1D2, A1D3, A1D4, A1D5, A2D1, A2D2, A2D3, A2D4 and A2D5 states, and the switching between the states is achieved by switching state changes of a plurality of automatic valves.

Further, a rated hydrogen adsorption capacity of the each of the two adsorbers per hour is X1 Nm³, a rated adsorption time is N hours, and a single hydrogen adsorption capacity of the each of the two adsorbers is Y1=N*X1 Nm³; an initial cumulative flow of the hydrogen flowmeter at an outlet of the each of the two adsorbers at the beginning of single adsorption is Y0 Nm³, and an actual adsorption hydrogen flow of the each of the two adsorbers is 0-100% of the rated value; and when a cumulative flow of the hydrogen flowmeter at the outlet of the each of the two adsorbers reaches Y2 Nm³, Y2=Y0+Y1, and the adsorption process is automatically switched to the desorption process, that is, the A1D is switched to the A2D or the A2D is switched to the A1D.

Further, the D1 to D3 stages are performed in sequence, and a total duration of the desorption process is W; at the D1 stage, pressurization is performed in one of the two adsorbers that is in the desorption process and the pre-adsorber, a feedback pressure of a third pressure transmitter at an outlet of the pre-adsorber reaches P1 MPa, and a duration of the D1 stage is W1 and is not a constant value; the hydrogen self-circulation apparatus and the desorption heater are started, a self-circulation hydrogen capacity is X2 Nm³/h, an adsorbent in the pre-adsorber is pre-adsorbed, an adsorbent in the adsorber in the desorption process is desorbed, and a duration of the D2 stage is W2 and is a constant value; after the D2 stage is completed, the D3 stage is performed, the hydrogen self-circulation apparatus and the desorption heater continue to operate, the self-circulation hydrogen capacity is still X2 Nm³/h, the adsorbent in the adsorber in the desorption process is pre-adsorbed, the adsorbent in the pre-adsorber is desorbed, and a duration of the D3 stage is W3 and is a constant value; after the D3 stage is completed, the D5 stage is performed, the hydrogen self-circulation apparatus and the desorption heater are stopped, the adsorber in the desorption process and the pre-adsorber are both waiting, and a duration of the D5 stage is W5 and is not a constant value; at the D2 and D3 stages, if the feedback pressure of the third pressure transmitter at the outlet of the pre-adsorber is lower than P2 MPa, the hydrogen self-circulation apparatus and the desorption heater are closed, and a timing of a corresponding stage is stopped; the D4 stage is performed, and a duration of the D4 stage is W4 and is not a constant value; after a pressure is replenished until the feedback pressure of the third pressure transmitter reaches P1 MPa, the hydrogen self-circulation apparatus and the desorption heater are automatically started to continue an operation of the corresponding stage; and an actual single adsorption time of the adsorber in the adsorption process is Z, wherein Z=W, Z-W5=W1+W2+W3+W4≤N, 0<P2<P1, and 0<X2≤X1.

Further, adsorbents in the first adsorber and the second adsorber are filled according to a single hydrogen adsorption capacity Y1, an adsorbent in the pre-adsorber is filled according to a single hydrogen pre-adsorption capacity Y3=W2*X2 Nm³, and effective volumes of the first adsorber and the second adsorber are greater than an effective volume of the pre-adsorber.

Further, a liquid outlet of the desorption gas-water separator is connected to an inlet of the water collector through a liquid outlet automatic valve, an outlet of the water collector is connected to a drain outlet through a drain automatic valve, an effective volume of the water collector is V, and a total water volume in single absorption of Y1 Nm³ of hydrogen by the adsorber is V1, wherein V1=1/2V; when the one of the two adsorbers that is in the desorption process and the pre-adsorber just enter the D5 stage, the drain automatic valve is opened, and each drain time is T1; and the liquid outlet automatic valve is in a normally open state, T2 time before the drain automatic valve is opened, the liquid outlet automatic valve is closed, and after the drain automatic valve has been closed for a period of T2, the liquid outlet automatic valve is opened.

Further, in the A1D1 state, the first adsorber is the adsorption process, hydrogen enters the first adsorber through a first adsorption intake automatic valve from a raw hydrogen inlet for adsorption drying, a dried hydrogen flows out from a first adsorption exhaust automatic valve, and most of the product hydrogen is adjusted through the self-operated pressure adjusting valve to obtain a pressure of P1 MPa and then output, so as to achieve that an adsorption operating flow of the first adsorber is adjustable within a range of 0-100%; the second adsorber is the pressurization stage in the desorption process, and the pre-adsorber is the pressurization stage in the pre-adsorption process; when hydrogen is input from the raw hydrogen inlet, a small portion of the product hydrogen output from the first adsorber is pressurized through a second adsorption exhaust automatic valve, the second adsorber, a second desorption exhaust automatic valve, an adsorber desorption exhaust automatic switching valve, the desorption cooler, the desorption gas-water separator, a pre-adsorption intake automatic switching valve, the pre-adsorber, the pre-adsorption exhaust automatic switching valve, the hydrogen self-circulation apparatus, the desorption heater, an adsorber desorption intake automatic switching valve, a second desorption intake automatic valve and connected pipelines until a pressure of a third pressure transmitter at an outlet of the pre-adsorber reaches P1 MPa; and when no hydrogen is input from the raw hydrogen inlet, internal pressurization can be selected during hydrogen input of the first adsorber and the valves remain in original positions, or external pressurization can be selected, a second adsorption exhaust automatic valve of the second adsorber is closed, and external high-purity hydrogen or high-purity nitrogen input through an external pressurization automatic valve from an external pressurization inlet is pressurized through the adsorber desorption intake automatic switching valve, the second desorption intake automatic valve, the second adsorber, the second desorption exhaust automatic valve, the adsorber desorption exhaust automatic switching valve, the desorption cooler, the desorption gas-water separator, the pre-adsorption intake automatic switching valve, the pre-adsorber, the pre-adsorption exhaust automatic switching valve, the hydrogen self-circulation apparatus, the desorption heater and internally connected pipelines until the pressure of the third pressure transmitter at the outlet of the pre-adsorber reaches P1 MPa.

Further, in the A1D2 state, after drying with the first adsorber, all product hydrogen is adjusted through the self-operated pressure adjusting valve to obtain the pressure of P1 MPa and then output, so as to achieve that the adsorption operating flow of the first adsorber is adjustable within the range of 0-100%; the second adsorber is the desorption stage in the desorption process, the pre-adsorber is the pre-adsorption stage in the pre-adsorption process, and the hydrogen self-circulation apparatus and the desorption heater are started; a gas with the pressure of P1 MPa in the pre-adsorber passes through the pre-adsorption exhaust automatic switching valve, the hydrogen self-circulation apparatus and the desorption heater, then passes through the adsorber desorption intake automatic switching valve and the second desorption intake automatic valve to enter the second adsorber for heating desorption of an internal adsorbent, and finally passes through the second desorption exhaust automatic valve, the adsorber desorption exhaust automatic switching valve, the desorption cooler for cooling and the desorption gas-water separator for gas-water separation to self-circulate to the pre-adsorber, and a self-circulation duration is W2, so as to achieve that the adsorption process of the first adsorber is independent of the desorption process of the second adsorber; and within the range of 0-100% of the adsorption operating flow of the first adsorber, the second adsorber still can complete regeneration.

Further, in the A1D3 state, after drying with the first adsorber, all product hydrogen is adjusted through the self-operated pressure adjusting valve to obtain the pressure of P1 MPa and then output, so as to achieve that the adsorption operating flow of the first adsorber is adjustable within the range of 0-100%; the second adsorber is the adsorption stage in the desorption process, the pre-adsorber is the desorption stage in the pre-adsorption process, and the hydrogen self-circulation apparatus and the desorption heater operate; a gas with the pressure of P1 MPa in the second adsorber passes through the second desorption intake automatic valve, the pre-adsorption exhaust automatic valve, the hydrogen self-circulation apparatus and the desorption heater for heating, then passes through the desorption intake automatic switching valve to enter the pre-adsorber for heating desorption of an internal adsorbent, and finally passes through the desorption exhaust automatic switching valve, the desorption cooler for cooling and the desorption gas-water separator for gas-water separation and then passes through the pre-adsorption intake automatic valve and the second desorption exhaust automatic valve to self-circulate to the second adsorber, and a self-circulation duration is W3, so as to achieve that the adsorption process of the first adsorber is independent of the desorption process of the pre-adsorber; and within the range of 0-100% of the adsorption operating flow of the first adsorber, the pre-adsorber still can complete regeneration.

Further, in the A1D4 state, after drying with the first adsorber, all product hydrogen is adjusted through the self-operated pressure adjusting valve to obtain the pressure of P1 MPa and then output, so as to achieve that the adsorption operating flow of the first adsorber is adjustable within the range of 0-100%; the second adsorber is the pressure replenishment stage in the desorption process, and the pre-adsorber is the pressure replenishment stage in the pre-adsorption process; at the D2 and D3 stages, if the feedback pressure of the third pressure transmitter is lower than P2 MPa, the hydrogen self-circulation apparatus and the desorption heater are closed, a timing of a corresponding stage is stopped, the second adsorption exhaust automatic valve or the external pressurization automatic valve is opened for pressure replenishment, and other valves remain in original positions; and after the pressure is replenished until the feedback pressure of the third pressure transmitter reaches P1 MPa, the second adsorption exhaust automatic valve or the external pressurization automatic valve is closed, and the hydrogen self-circulation apparatus and the desorption heater are automatically started to continue operating.

Further, in the A1D5 state, after drying with the first adsorber, all product hydrogen is adjusted through the self-operated pressure adjusting valve to obtain the pressure of P1 MPa and then output, so as to achieve that the adsorption operating flow of the first adsorber is adjustable within the range of 0-100%; and the second adsorber is the waiting stage in the desorption process, the pre-adsorber is the waiting stage in the pre-adsorption process, the hydrogen self-circulation apparatus and the desorption heater are stopped, the valves remain in original positions, and a waiting duration is W5.

Further, in the A2D1 state, the second adsorber is the adsorption process, hydrogen enters the second adsorber through a second adsorption intake automatic valve from a raw hydrogen inlet for adsorption drying, a dried hydrogen flows out from a second adsorption exhaust automatic valve, and most of the product hydrogen is adjusted through a self-operated pressure adjusting valve to obtain a pressure of P1 MPa and then output, so as to achieve that an adsorption operating flow of the second adsorber is adjustable within a range of 0-100%; the first adsorber is the pressurization stage in the desorption process, and the pre-adsorber is the pressurization stage in the pre-adsorption process; when hydrogen is input from the raw hydrogen inlet, a small portion of the product hydrogen output from the second adsorber is pressurized through a first adsorption exhaust automatic valve, the first adsorber, a first desorption exhaust automatic valve, an adsorber desorption exhaust automatic switching valve, the desorption cooler, the desorption gas-water separator, a pre-adsorption intake automatic switching valve, the pre-adsorber, a pre-adsorption exhaust automatic switching valve, the hydrogen self-circulation apparatus, the desorption heater, an adsorber desorption intake automatic switching valve, a first desorption intake automatic valve and connected pipelines until a pressure of a third pressure transmitter at an outlet of the pre-adsorber reaches P1 MPa; and when no hydrogen is input from the raw hydrogen inlet, internal pressurization can be selected during hydrogen input of the second adsorber and the valves remain in original positions, or external pressurization can be selected, a first adsorption exhaust automatic valve of the first adsorber is closed, and external high-purity hydrogen or high-purity nitrogen input through an external pressurization automatic valve from an external pressurization inlet is pressurized through the adsorber desorption intake automatic switching valve, the first desorption intake automatic valve, the first adsorber, the first desorption exhaust automatic valve, the adsorber desorption exhaust automatic switching valve, the desorption cooler, the desorption gas-water separator, the pre-adsorption intake automatic switching valve, the pre-adsorber, the pre-adsorption exhaust automatic switching valve, the hydrogen self-circulation apparatus, the desorption heater and internally connected pipelines until a pressure of a third pressure transmitter at an outlet of the pre-adsorber reaches P1 MPa.

Further, in the A2D2 state, after drying with the second adsorber, all product hydrogen is adjusted through the self-operated pressure adjusting valve to obtain the pressure of P1 MPa and then output, so as to achieve that the adsorption operating flow of the second adsorber is adjustable within the range of 0-100%; the first adsorber is the desorption stage in the desorption process, the pre-adsorber is the pre-adsorption stage in the pre-adsorption process, and the hydrogen self-circulation apparatus and the desorption heater are started; a gas with the pressure of P1 MPa in the pre-adsorber passes through the pre-adsorption exhaust automatic switching valve, the hydrogen self-circulation apparatus and the desorption heater, then passes through the adsorber desorption intake automatic switching valve and the first desorption intake automatic valve to enter the first adsorber for heating desorption of an internal adsorbent, and finally passes through the first desorption exhaust automatic valve, the adsorber desorption exhaust automatic switching valve, the desorption cooler for cooling and the desorption gas-water separator for gas-water separation to self-circulate to the pre-adsorber, and a self-circulation duration is W2, so as to achieve that the adsorption process of the second adsorber is independent of the desorption process of the first adsorber; and within the range of 0-100% of the adsorption operating flow of the second adsorber, the first adsorber still can complete regeneration.

Further, in the A2D3 state, after drying with the second adsorber, all product hydrogen is adjusted through the self-operated pressure adjusting valve to obtain the pressure of P1 MPa and then output, so as to achieve that the adsorption operating flow of the second adsorber is adjustable within the range of 0-100%; the first adsorber is the adsorption stage in the desorption process, the pre-adsorber is the desorption stage in the pre-adsorption process, and the hydrogen self-circulation apparatus and the desorption heater operate; a gas with the pressure of P1 MPa in the first adsorber passes through the first desorption intake automatic valve, the pre-adsorption exhaust automatic valve, the hydrogen self-circulation apparatus and the desorption heater for heating, then passes through a desorption intake automatic switching valve to enter the pre-adsorber for heating desorption of an internal adsorbent, and finally passes through a desorption exhaust automatic switching valve, the desorption cooler for cooling and the desorption gas-water separator for gas-water separation and then passes through the pre-adsorption intake automatic valve and the first desorption exhaust automatic valve to self-circulate to the first adsorber, and a self-circulation duration is W3, so as to achieve that the adsorption process of the second adsorber is independent of the desorption process of the pre-adsorber; and within the range of 0-100% of the adsorption operating flow of the second adsorber, the pre-adsorber still can complete regeneration.

Further, in the A2D4 state, after drying with the second adsorber, all product hydrogen is adjusted through the self-operated pressure adjusting valve to obtain the pressure of P1 MPa and then output, so as to achieve that the adsorption operating flow of the second adsorber is adjustable within the range of 0-100%; the first adsorber is the pressure replenishment stage in the desorption process, and the pre-adsorber is the pressure replenishment stage in the pre-adsorption process; at the D2 and D3 stages, if a feedback pressure of the third pressure transmitter is lower than P2 MPa, the hydrogen self-circulation apparatus and the desorption heater are closed, a timing of a corresponding stage is stopped, the first adsorption exhaust automatic valve or the external pressurization automatic valve is opened for pressure replenishment, and other valves remain in original positions; and after the pressure is replenished until the feedback pressure of the third pressure transmitter reaches P1 MPa, the first adsorption exhaust automatic valve or the external pressurization automatic valve is closed, and the hydrogen self-circulation apparatus and the desorption heater are automatically started to continue operating.

Further, in the A2D5 state, after drying with the second adsorber, all product hydrogen is adjusted through the self-operated pressure adjusting valve to obtain the pressure of P1 MPa and then output, so as to achieve that the adsorption operating flow of the second adsorber is adjustable within the range of 0-100%; and the first adsorber is the waiting stage in the desorption process, the pre-adsorber is the waiting stage in the pre-adsorption process, the hydrogen self-circulation apparatus and the desorption heater are stopped, the valves remain in original positions, and a waiting duration is W5.

The technical solution of this disclosure provides a hydrogen drying system for hydrogen production using renewable energy, including two adsorbers, a pre-adsorber, a hydrogen self-circulation apparatus, a desorption heater, a desorption cooler and a desorption gas-water separator, wherein the two adsorbers are arranged in parallel, the two adsorbers alternately perform an adsorption process and a desorption process, the adsorption flow of each of the adsorbers changes along with the fluctuations of input renewable energy, and an operating state of each of the adsorbers is switched by means of accumulating the hydrogen flow treated by each of the adsorbers in a single adsorption process; the pre-adsorber is connected in series to one of the two adsorbers and is used for assisting in the desorption process; in the desorption process, hydrogen in the adsorber in the desorption process or the pre-adsorber is circulated through the hydrogen self-circulation apparatus, the desorption process is independent of the adsorption process, and after the adsorption process is completed, dried hydrogen is directly output; the desorption heater is connected to an outlet of the hydrogen self-circulation apparatus to heat the hydrogen output from the hydrogen self-circulation apparatus; and an inlet of the desorption cooler is connected to each of the adsorbers or the pre-adsorber and an outlet of the desorption cooler is connected to the desorption gas-water separator to condense water vapor carried in hydrogen in the desorption process, hydrogen and liquid water are separated by the desorption gas-water separator, and the hydrogen outlet of the desorption gas-water separator is connected to the each of the adsorbers or the pre-adsorber. In this solution, the adsorption process and the desorption process are independent of each other. After a raw gas enters one of the adsorbers and absorption is completed, all the raw gas is output. In the desorption process, hydrogen in the pre-adsorber or the adsorber in the desorption process is circulated through the hydrogen self-circulation apparatus to achieve hydrogen regeneration, so that the problem of incomplete desorption due to desorption interruption caused by the flow fluctuation of the raw hydrogen is effectively solved, and it is particularly matched to use intermittent and fluctuating renewable energy for hydrogen production . This solution innovatively optimizes the design, and the system operation meets the requirement of 0-100% of the load in hydrogen production using renewable energy.

The above hydrogen drying system for hydrogen production using renewable energy is used for drying all hydrogen produced under intermittent or fluctuating operating conditions of renewable energy, that is, the hydrogen drying system can have an ability to start and stop at any time according to the characteristics of the renewable energy, so as to achieve that an adsorber obtains pure hydrogen within an operating flow range of 0-100%. A regeneration adsorber and a regeneration pre-adsorber still can independently complete regeneration within an operating flow range of 0-100%, thereby ensuring thorough regeneration and achieving an adsorption ability after adsorber desorption switching at any time.

### Brief Description of the Drawings

The accompanying drawings of the specification, constituting a part of this disclosure, are used to provide a further understanding for this disclosure. Exemplary embodiments of this disclosure and descriptions thereof are used to explain this disclosure, but do not constitute any improper limitation on this disclosure. In the accompanying drawings:
Fig. 1 is a schematic diagram of a hydrogen drying system for hydrogen production using renewable energy provided in this disclosure;
Fig. 2 is a schematic diagram during adsorption of a first adsorber, pressurization of a second adsorber and pressurization of a pre-adsorber in an A1D1 state of this disclosure;
Fig. 3 is a schematic diagram during adsorption of the first adsorber, desorption of the second adsorber and pre-adsorption of the pre-adsorber in an A1D2 state of this disclosure;
Fig. 4 is a schematic diagram during adsorption of the first adsorber, pre-adsorption of the second adsorber and desorption of the pre-adsorber in an A1D3 state of this disclosure;
Fig. 5 is a schematic diagram during adsorption of the second adsorber, pressurization of the first adsorber and pressurization of the pre-adsorber in an A2D1 state of this disclosure;
Fig. 6 is a schematic diagram during adsorption of the second adsorber, desorption of the first adsorber and pre-adsorption of the pre-adsorber in an A2D2 state of this disclosure;
Fig. 7 is a schematic diagram during adsorption of the second adsorber, pre-adsorption of the first adsorber and desorption of the pre-adsorber in an A2D3 state of this disclosure; and
Fig. 8 is a schematic diagram of self-circulation units in a hydrogen self-circulation apparatus in Fig. 1.

The above accompanying drawings have the following reference numerals:
01. raw hydrogen inlet; 02. product hydrogen outlet; 03. hydrogen vent; 04. cooling water outlet; 05. cooling water inlet; 06. drain outlet; 07. external pressurization inlet;
1. first adsorber; 11. first adsorption intake automatic valve; 12. first adsorption exhaust automatic valve; 13. first desorption exhaust automatic valve; 14. first desorption intake automatic valve; 15. pre-adsorption intake automatic valve; 16. pre-adsorption exhaust automatic valve; 17. first pressure transmitter;
2. second adsorber; 21. second adsorption intake automatic valve; 22. second adsorption exhaust automatic valve; 23. second desorption exhaust automatic valve; 24. second desorption intake automatic valve; 25. adsorber desorption exhaust automatic switching valve; 26. adsorber desorption intake automatic switching valve; 27. second pressure transmitter;
3. pre-adsorber; 31. pre-adsorption intake automatic switching valve; 32. desorption intake automatic switching valve; 33. desorption exhaust automatic switching valve; 34. pre-adsorption exhaust automatic switching valve; 35. third pressure transmitter;
4. hydrogen self-circulation apparatus; 41. first self-circulation unit; 42. second self-circulation unit; 43. third self-circulation unit; 411. first inlet shut-off valve; 412. first self-circulation device; 413. first outlet non-return valve; 414. first outlet shut-off valve; 421. second inlet shut-off valve; 422. second self-circulation device; 423. second outlet non-return valve; 424. second outlet shut-off valve; 431. third inlet shut-off valve; 432. third self-circulation device; 433. third outlet non-return valve; 434. third outlet shut-off valve;
5. desorption heater;
6. desorption cooler;
7. desorption gas-water separator; 71. liquid outlet automatic valve;
8. water collector; 81. drain automatic valve;
91. self-operated pressure adjusting valve; 92. hydrogen flowmeter; 93. hydrogen dew point instrument; 94. product hydrogen automatic valve; 95. hydrogen venting automatic valve; 96. external pressurization automatic valve.

### Detailed Description of the Embodiments

The following clearly and completely describes technical solutions in embodiments of this disclosure with reference to the accompanying drawings in the embodiments of this disclosure. It is apparent that the described embodiments are only a part of the embodiments of this disclosure, rather than all of the embodiments. The following descriptions of at least one exemplary embodiment are merely illustrative actually, and should not be construed as any limitation on this disclosure and the disclosure or use thereof. All other embodiments obtained by those of ordinary skill in the art based on the embodiments in this disclosure without creative efforts shall fall within the scope of protection of this disclosure.

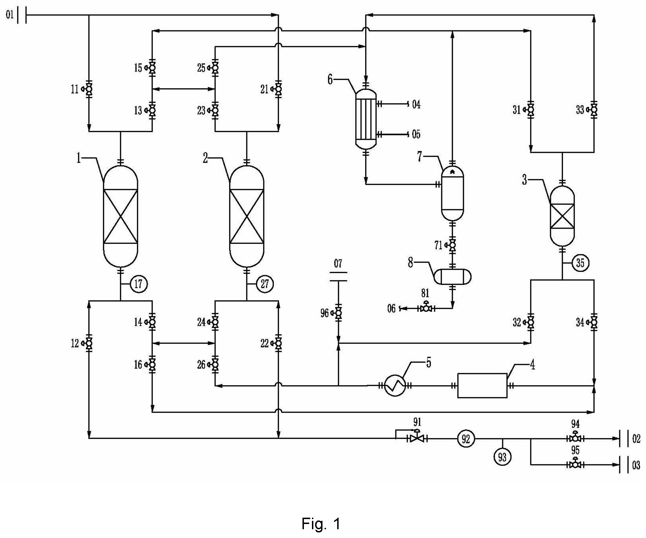

As shown in Fig. 1 to Fig. 8, an embodiment of this disclosure provides a hydrogen drying system for hydrogen production using renewable energy, including two adsorbers, a pre-adsorber 3, a hydrogen self-circulation apparatus 4, a desorption heater 5, a desorption cooler 6 and a desorption gas-water separator 7, wherein the two adsorbers are arranged in parallel, the two adsorbers alternately perform an adsorption process and a desorption process, the adsorption flow of each of the adsorbers changes along with the fluctuations of input renewable energy, and an operating state of each of the adsorbers is switched by means of accumulating the hydrogen flow treated by each of the adsorbers in a single adsorption process; the pre-adsorber 3 is connected in series to one of the adsorbers and is used for assisting in the desorption process; in the desorption process, hydrogen in the adsorber in the desorption process or the pre-adsorber 3 is circulated through the hydrogen self-circulation apparatus 4, the desorption process is independent of the adsorption process, and after the adsorption process is completed, dried hydrogen is directly output; the desorption heater 5 is connected to an outlet of the hydrogen self-circulation apparatus 4 to heat the hydrogen output from the hydrogen self-circulation apparatus 4; and an inlet of the desorption cooler 6 is connected to the each of the adsorbers or the pre-adsorber 3 and an outlet of the desorption cooler 6 is connected to the desorption gas-water separator 7 to condense water vapor carried in hydrogen in the desorption process, hydrogen and liquid water are separated by the desorption gas-water separator 7, and a hydrogen outlet of the desorption gas-water separator 7 is connected to the each of the adsorbers or the pre-adsorber 3.

In this solution, the adsorption process and the desorption process are independent of each other. After a raw gas enters the adsorbers and absorption is completed, all the raw gas is output. In the desorption process, hydrogen in the pre-adsorber 3 or the adsorbers is circulated through the hydrogen self-circulation apparatus 4 to achieve hydrogen regeneration, so that the problem of incomplete desorption due to desorption interruption caused by the flow fluctuation of the raw hydrogen is effectively solved, and intermittent and fluctuating renewable energy is matched particularly to perform hydrogen production. Furthermore, in this solution, the operating state of the adsorber is switched by means of accumulating the hydrogen flow treated by the adsorber in a single adsorption process, rather than switching the operating state of the adsorber based on a timed interval. The embodiment innovatively optimizes the design, the system operation meets the requirement of 0-100% of the load in hydrogen production using renewable energy, and regeneration before adsorption saturation of the adsorber is avoided, thereby reducing the heating desorption frequency, reducing the energy consumption, and ensuring desorption and drying effects.

The desorption process is specifically divided into a pressurization stage, a desorption stage, a pre-adsorption stage, a pressure replenishment stage and a waiting stage, and each operating stage is implemented by intelligently controlling the switching states of automatic valves by programs. The pre-adsorption process is divided into a pressurization stage, a pre-adsorption stage, a desorption stage, a pressure replenishment stage and a waiting stage, and each operating stage is implemented by intelligently controlling the switching states of automatic valves by programs. The desorption heater 5 includes an internal electric heating core and a container and is used for heating the hydrogen output from the hydrogen self-circulation apparatus 4 for desorption of the adsorbent in the adsorber.

**In** some embodiments, the two adsorbers are respectively a first adsorber 1 and a second adsorber 2, an inlet of the first adsorber 1 is connected to a raw hydrogen inlet 01 through a first adsorption intake automatic valve 11, the inlet of the first adsorber 1 is connected to the pre-adsorber 3 through a first desorption exhaust automatic valve 13 and a pre-adsorption intake automatic valve 15 arranged sequentially, an outlet of the first adsorber 1 is connected with a first adsorption exhaust automatic valve 12 for discharging hydrogen, and the outlet of the first adsorber 1 is connected to the hydrogen self-circulation apparatus 4 and the pre-adsorber 3 through a first desorption intake automatic valve 14 and a first pre-adsorption exhaust automatic valve 16 arranged sequentially; an inlet of the second adsorber 2 is connected to the raw hydrogen inlet 01 through a second adsorption intake automatic valve 21, the inlet of the second adsorber 2 is connected to the desorption cooler 6 through a second desorption exhaust automatic valve 23 and an adsorber desorption exhaust automatic switching valve 25 arranged sequentially, an outlet of the second adsorber 2 is connected with a second adsorption exhaust automatic valve 22 for discharging hydrogen, and the outlet of the second adsorber 2 is connected to the desorption heater 5 through a second desorption intake automatic valve 24 and an adsorber desorption intake automatic switching valve 26 arranged sequentially; the two adsorbers share one pre-adsorption intake automatic valve 15, one pre-adsorption exhaust automatic valve 16, one adsorber desorption intake automatic switching valve 26 and one adsorber desorption exhaust automatic switching valve 25; and the outlet of the first adsorber 1 is connected to a first pressure transmitter 17, and the outlet of the second adsorber 2 is connected to a second pressure transmitter 27.

As shown in Fig. 1, in some embodiments, an inlet of the pre-adsorber 3 is connected to the pre-adsorption intake automatic valve 15 through a pre-adsorption intake automatic switching valve 31, the inlet of the pre-adsorber 3 is connected to the desorption cooler 6 through a desorption exhaust automatic switching valve 33, an outlet of the pre-adsorber 3 is connected to an external pressurization inlet 07 through a desorption intake automatic switching valve 32, the outlet of the pre-adsorber 3 is connected to the hydrogen self-circulation apparatus 4 and the pre-adsorption exhaust automatic valve 16 through a pre-adsorption exhaust automatic switching valve 34, and the outlet of the pre-adsorber 3 is connected to a third pressure transmitter 35.

The inlet of the hydrogen self-circulation apparatus 4 is connected to the pre-adsorber 3 or the each of the adsorbers, the hydrogen self-circulation apparatus 4 includes multiple sets of self-circulation units, and when the operating flow of a single set of the self-circulation unit does not meet a desorption flow demand, the multiple sets of the self-circulation units operate in parallel; and each set of the self-circulation unit includes a self-circulation inlet shut-off valve, a self-circulation device, a self-circulation outlet non-return valve and a self-circulation outlet shut-off valve connected sequentially. After passing through the hydrogen self-circulation apparatus, the pressure is increased by ΔP MPa. In some embodiments, the ΔP is 0.2 MPa. The outlet non-return valve can effectively prevent the backflow of hot gas in the desorption heater 5 from affecting the service life of the self-circulation device. In some embodiments, the self-circulation device is a gas-driven hydrogen pressurization pump, but not limited to a hydrogen circulation pump, a diaphragm compressor, a pressurization valve, etc.

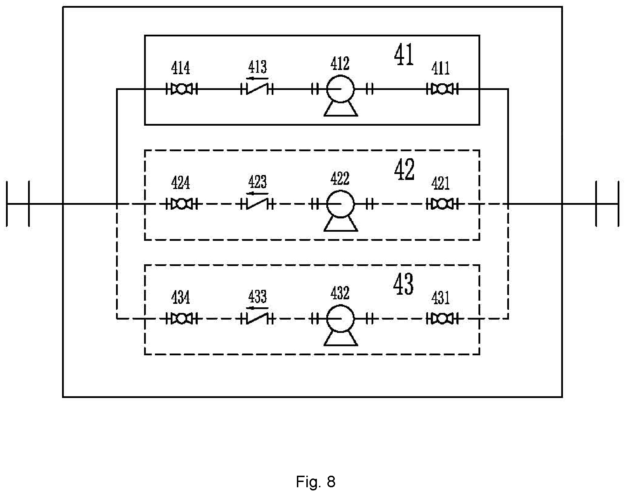

As shown in Fig. 8, the multiple sets of the self-circulation units include a first self-circulation unit 41, a second self-circulation unit 42 and a third self-circulation unit 43, wherein the first self-circulation unit 41 includes a first inlet shut-off valve 411, a first self-circulation device 412, a first outlet non-return valve 413 and a first outlet shut-off valve 414 connected sequentially; the second self-circulation unit 42 includes a second inlet shut-off valve 421, a second self-circulation device 422, a second outlet non-return valve 423 and a second outlet shut-off valve 424 connected sequentially; and the third self-circulation unit 43 includes a third inlet shut-off valve 431, a third self-circulation device 432, a third outlet non-return valve 433 and a third outlet shut-off valve 434 connected sequentially.

In this solution, the hydrogen drying system for hydrogen production using renewable energy further includes a raw hydrogen inlet 01, a product hydrogen outlet 02, a hydrogen vent 03, a cooling water outlet 04, a cooling water inlet 05, a drain outlet 06, an external pressurization inlet 07 and a water collector 8, wherein the raw hydrogen inlet 01 is connected to the inlet of the each of the two adsorbers, the product hydrogen outlet 02 is connected to the outlet of the each of the two adsorbers through a product hydrogen automatic valve 94, the hydrogen vent 03 is connected to the outlet of the each of the two adsorbers through a hydrogen venting automatic valve 95, a self-operated pressure adjusting valve 91, a hydrogen flowmeter 92 and a hydrogen dew point instrument 93 are arranged on a pipeline where the adsorber is connected to the product hydrogen outlet 02, the cooling water inlet 05 and the cooling water outlet 04 are both connected to the desorption cooler 6, the external pressurization inlet 07 is connected to the each of the two adsorbers and the pre-adsorber 3 through an external pressurization automatic valve 96, a liquid outlet of the desorption gas-water separator 7 is connected to an inlet of the water collector 8 through a liquid outlet automatic valve 71, and an outlet of the water collector 8 is connected to the drain outlet 06 through a drain automatic valve 81.

After the pressure of the dried hydrogen is adjusted through the self-operated pressure adjusting valve 91, the hydrogen dew point instrument 93 performs sampling analysis, and then, an intelligent control system makes a judgment. If the dew point is qualified, the dried hydrogen is output through the product hydrogen automatic valve 94. If the dew point is unqualified, the dried hydrogen is vented through the hydrogen venting automatic valve 95.

In the hydrogen drying system for hydrogen production using renewable energy, the desorption process includes a pressurization stage, a desorption stage, a pre-adsorption stage, a waiting stage and a pressure replenishment stage, and the pre-adsorption process of the pre-adsorber 3 includes a pressurization stage, a pre-adsorption stage, a desorption stage, a pressure replenishment stage and a waiting stage; the two adsorbers are respectively a first adsorber 1 and a second adsorber 2, the first adsorber 1 is an adsorption process A1, and the second adsorber 2 is a desorption process D, forming an A1D state; the second adsorber 2 is an adsorption process A2, and the first adsorber 1 is a desorption process D, forming an A2D state; the pressurization stage of the each of the two adsorbers corresponds to the pressurization stage of the pre-adsorber 3, forming a D1 stage; the desorption stage of the each of the two adsorbers corresponds to the adsorption stage of the pre-adsorber 3, forming a D2 stage; the pre-adsorption stage of the each of the two adsorbers corresponds to the desorption stage of the pre-adsorber 3, forming a D3 stage; the pressure replenishment stage of the each of the two adsorbers corresponds to the pressure replenishment stage of the pre-adsorber 3, forming a D4 stage; the waiting stage of the each of the two adsorbers corresponds to the waiting stage of the pre-adsorber 3, forming a D5 stage; and operating state combinations of the two adsorbers and the pre-adsorber 3 are divided into A1D1, A1D2, A1D3, A1D4, A1D5, A2D1, A2D2, A2D3, A2D4 and A2D5 states, and the switching between the states is achieved by switching state changes of a plurality of automatic valves.

In this solution, the adsorption flow of the each of the two adsorbers changes along with the fluctuations of the renewable energy, and the control system switches an operating state of the adsorber by means of accumulating the hydrogen flow treated by the corresponding adsorber in a single adsorption process, thereby effectively avoiding the energy loss caused by frequent heating desorption before adsorption saturation of the adsorber. The rated hydrogen adsorption capacity of the adsorber in the adsorption process per hour is X1 Nm³, the rated adsorption time is N hours, and the single hydrogen adsorption capacity of the adsorber is Y1=N*X1 Nm³; the initial cumulative flow of the hydrogen flowmeter 92 at the outlet of the adsorber at the beginning of single adsorption is Y0 Nm³, and an actual adsorption hydrogen flow of the adsorber is 0-100% of the rated value; and when the cumulative flow of the hydrogen flowmeter 92 at the outlet of the adsorber reaches Y2 Nm³, Y2=Y0+Y1, and the adsorption process is automatically switched to the desorption process, that is, the A1D is switched to the A2D or the A2D is switched to the A1D.

The D1 to D3 stages are performed in sequence, and the total duration of the desorption process is W; at the D1 stage, pressurization is performed in the adsorber in the desorption process and the pre-adsorber 3, a feedback pressure of the third pressure transmitter 35 at the outlet of the pre-adsorber 3 reaches P1 MPa, and a duration of the D1 stage is W1 and is not a constant value; the hydrogen self-circulation apparatus 4 and the desorption heater 5 are started, a self-circulation hydrogen capacity is X2 Nm³/h, the adsorbent in the pre-adsorber 3 is pre-adsorbed, the adsorbent in the adsorber in the desorption process is desorbed, and a duration of the D2 stage is W2 and is a constant value; after the D2 stage is completed, the D3 stage is performed, the hydrogen self-circulation apparatus 4 and the desorption heater 5 continue to operate, the self-circulation hydrogen capacity is still X2 Nm³/h, the adsorbent in the adsorber is pre-adsorbed, the adsorbent in the pre-adsorber 3 is desorbed, and a duration of the D3 stage is W3 and is a constant value; after the D3 stage is completed, the D5 stage is performed, the hydrogen self-circulation apparatus 4 and the desorption heater 5 are stopped, the adsorber in the desorption process and the pre-adsorber 3 are both waiting, and a duration of the D5 stage is W5 and is not a constant value; at the D2 and D3 stages, if the feedback pressure of the third pressure transmitter 35 at the outlet of the pre-adsorber 3 is lower than P2 MPa, the hydrogen self-circulation apparatus 4 and the desorption heater 5 are closed, and a timing of a corresponding stage is stopped; the D4 stage is performed, and a duration of the D4 stage is W4 and is not a constant value; after the pressure is replenished until the feedback pressure of the third pressure transmitter 35 reaches P1 MPa, the hydrogen self-circulation apparatus 4 and the desorption heater 5 are automatically started to continue the operation of the corresponding stage; and an actual single adsorption time of the adsorber in the adsorption process is Z, wherein Z=W, Z-W5=W1+W2+W3+W4≤N, 0<P2<P1, and 0<X2≤X1.

The adsorbents in the first adsorber 1 and the second adsorber 2 are filled according to a single hydrogen adsorption capacity Y1, the adsorbent in the pre-adsorber 3 is filled according to a single hydrogen pre-adsorption capacity Y3=W2*X2 Nm³, and the effective volume of the first adsorber 1 and the second adsorber 2 is greater than the effective volume of the pre-adsorber 3. The filling capacity of the adsorbent in the first adsorber 1 is the same as that of the adsorbent in the second adsorber 2, and the filling capacity of the adsorbent in the pre-adsorber 3 is less than that of the adsorbents in the first adsorber 1 and the second adsorber 2, that is, the effective volume of the first adsorber 1 and the second adsorber 2 is greater than the effective volume of the pre-adsorber 3.

The liquid outlet of the desorption gas-water separator 7 is connected to the inlet of the water collector 8 through a liquid outlet automatic valve 71, the outlet of the water collector 8 is connected to the drain outlet 06 through a drain automatic valve 81, the effective volume of the water collector 8 is V, and the total water volume in single absorption of Y1 Nm³ of hydrogen by the adsorber is V1, wherein V1=1/2V, thereby ensuring that the liquid level in the water collector 8 does not exceed the limit during a single desorption cycle; when the adsorber in the desorption process and the pre-adsorber 3 just enter the D5 stage, the drain automatic valve 81 is opened, and each drain time is T1; the liquid outlet automatic valve 71 is in a normally open state; and to avoid pressure fluctuations in the pre-adsorber 3 and the adsorber in a drain process, at the time T2 before the drain automatic valve 81 is opened, the liquid outlet automatic valve 71 is closed, and after the drain automatic valve 81 has been closed for a period of T2 time, the liquid outlet automatic valve 71 is opened.

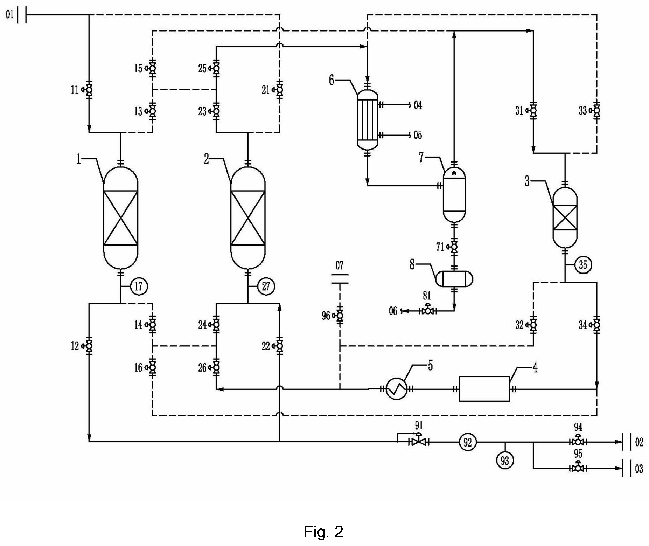

As shown in Fig. 2, in the A1D1 state, the first adsorber 1 is the adsorption process, hydrogen enters the first adsorber 1 through the first adsorption intake automatic valve 11 from the raw hydrogen inlet 01 for adsorption drying, a dried hydrogen flows out from the first adsorption exhaust automatic valve 12, and most of the product hydrogen is adjusted through the self-operated pressure adjusting valve 91 to obtain a pressure of P1 MPa and then output, so as to achieve that the adsorption operating flow of the first adsorber 1 is adjustable within a range of 0-100%. The pressurization manner is divided into internal pressurization and external pressurization, and in some embodiments, is the internal pressurization; the second adsorber 2 is the pressurization stage in the desorption process, and the pre-adsorber 3 is the pressurization stage in the pre-adsorption process; when hydrogen is input from the raw hydrogen inlet 01, that is, the instantaneous flow of the hydrogen flowmeter at the outlet of the adsorber is not 0, a small portion of the product hydrogen output from the first adsorber 1 as an internal pressurization gas source is pressurized through the second adsorption exhaust automatic valve 22, the second adsorber 2, the second desorption exhaust automatic valve 23, the adsorber desorption exhaust automatic switching valve 25, the desorption cooler 6, the desorption gas-water separator 7, the pre-adsorption intake automatic switching valve 31, the pre-adsorber 3, the pre-adsorption exhaust automatic switching valve 34, the hydrogen self-circulation apparatus 4, the desorption heater 5, the adsorber desorption intake automatic switching valve 26, the second desorption intake automatic valve 24 and connected pipelines until the pressure of the third pressure transmitter 35 at the outlet of the pre-adsorber 3 reaches P1 MPa; and when no hydrogen is input from the raw hydrogen inlet 01, that is, the instantaneous flow of the hydrogen flowmeter 92 at the outlet of the adsorber is 0, internal pressurization can be selected during hydrogen input of the first adsorber 1 and the valves remain in original positions, or external pressurization can be selected, the second adsorption exhaust automatic valve 22 of the second adsorber 2 is closed, and external high-purity hydrogen or high-purity nitrogen input through the external pressurization automatic valve 96 from the external pressurization inlet 07 is pressurized through the adsorber desorption intake automatic switching valve 26, the second desorption intake automatic valve 24, the second adsorber 2, the second desorption exhaust automatic valve 23, the adsorber desorption exhaust automatic switching valve 25, the desorption cooler 6, the desorption gas-water separator 7, the pre-adsorption intake automatic switching valve 31, the pre-adsorber 3, the pre-adsorption exhaust automatic switching valve 34, the hydrogen self-circulation apparatus 4, the desorption heater 5 and internally connected pipelines until the pressure of the third pressure transmitter 35 at the outlet of the pre-adsorber 3 reaches P1 MPa.

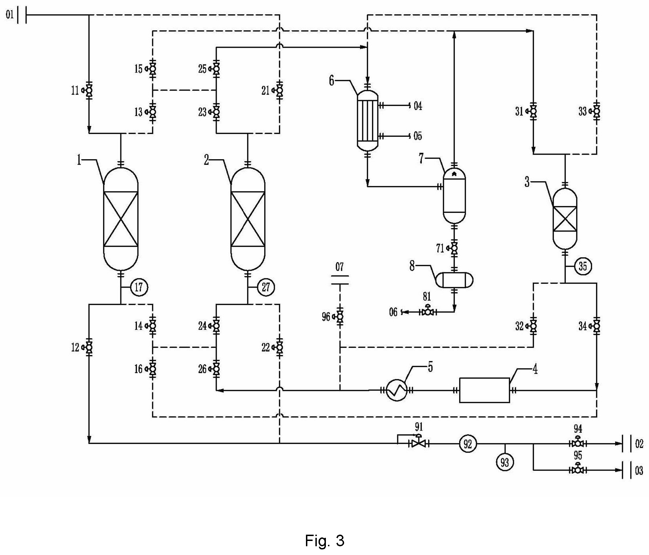

As shown in Fig. 3, in the A1D2 state, the first adsorber 1 is the adsorption process, the second adsorber 2 is the desorption stage in the desorption process, and the pre-adsorber 3 is the pre-adsorption stage in the pre-adsorption process. After drying with the first adsorber 1, all product hydrogen is adjusted through the self-operated pressure adjusting valve 91 to obtain a pressure of P1 MPa and then output, so as to achieve that the adsorption operating flow of the first adsorber 1 is adjustable within the range of 0-100%; the second adsorber 2 is the desorption stage in the desorption process, the pre-adsorber 3 is the pre-adsorption stage in the pre-adsorption process, and the hydrogen self-circulation apparatus 4 and the desorption heater 5 are started; the gas with the pressure of P1 MPa in the pre-adsorber 3 passes through the pre-adsorption exhaust automatic switching valve 34, the hydrogen self-circulation apparatus 4 and the desorption heater 5, then passes through the adsorber desorption intake automatic switching valve 26 and the second desorption intake automatic valve 24 to enter the second adsorber 2 for heating desorption of the internal adsorbent, and finally passes through the second desorption exhaust automatic valve 23, the adsorber desorption exhaust automatic switching valve 25, the desorption cooler 6 for cooling and the desorption gas-water separator 7 for gas-water separation to self-circulate to the pre-adsorber 3, and the self-circulation duration is W2, so as to achieve that the adsorption process of the first adsorber 1 is independent of the desorption process of the second adsorber 2; and within the range of 0-100% of the adsorption operating flow of the first adsorber 1, the second adsorber 2 still can complete regeneration.

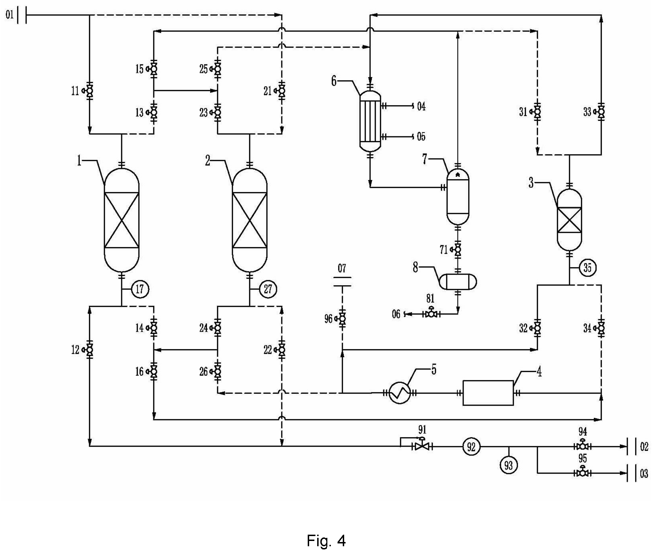

As shown in Fig. 4, in the A1D3 state, the first adsorber 1 is the adsorption process, the second adsorber 2 is the adsorption stage in the desorption process, and the pre-adsorber 3 is the desorption stage in the pre-adsorption process. After drying with the first adsorber 1, all product hydrogen is adjusted through the self-operated pressure adjusting valve 91 to obtain a pressure of P1 MPa and then output, so as to achieve that the adsorption operating flow of the first adsorber 1 is adjustable within a range of 0-100%; the second adsorber 2 is the adsorption stage in the desorption process, the pre-adsorber 3 is the desorption stage in the pre-adsorption process, and the hydrogen self-circulation apparatus 4 and the desorption heater 5 operate; the gas with the pressure of P1 MPa in the second adsorber 2 passes through the second desorption intake automatic valve 24, the pre-adsorption exhaust automatic valve 16, the hydrogen self-circulation apparatus 4 and the desorption heater 5 for heating, then passes through the desorption intake automatic switching valve 32 to enter the pre-adsorber 3 for heating desorption of the internal adsorbent, and finally passes through the desorption exhaust automatic switching valve 33, the desorption cooler 6 for cooling and the desorption gas-water separator 7 for gas-water separation and then passes through the pre-adsorption intake automatic valve 15 and the second desorption exhaust automatic valve 23 to self-circulate to the second adsorber 2, and the self-circulation duration is W3, so as to achieve that the adsorption process of the first adsorber 1 is independent of the desorption process of the pre-adsorber 3; and within the range of 0-100% of the adsorption operating flow of the first adsorber 1, the pre-adsorber 3 still can complete regeneration.

In the A1D4 state, referring to Fig. 3 and Fig. 4, the first adsorber 1 is the adsorption process, the second adsorber 2 is the pressure replenishment stage in the desorption process, and the pre-adsorber 3 is the pressure replenishment stage in the pre-adsorption process. After drying with the first adsorber 1, all product hydrogen is adjusted through the self-operated pressure adjusting valve 91 to obtain the pressure of P1 MPa and then output, so as to achieve that the adsorption operating flow of the first adsorber 1 is adjustable within the range of 0-100%; the second adsorber 2 is the pressure replenishment stage in the desorption process, and the pre-adsorber 3 is the pressure replenishment stage in the pre-adsorption process; at the D2 and D3 stages, if the feedback pressure of the third pressure transmitter 35 is lower than P2 MPa, the hydrogen self-circulation apparatus 4 and the desorption heater 5 are closed, the timing of the corresponding stage is stopped, the second adsorption exhaust automatic valve 22 or the external pressurization automatic valve 96 is opened for pressure replenishment, and other valves remain in original positions; and after the pressure is replenished until the feedback pressure of the third pressure transmitter 35 reaches P1 MPa, the second adsorption exhaust automatic valve 22 or the external pressurization automatic valve 96 is closed, and the hydrogen self-circulation apparatus 4 and the desorption heater 5 are automatically started to continue operating.

**In** the A1D5 state, referring to Fig. 4, the first adsorber 1 is the adsorption process, the second adsorber 2 is the waiting stage in the desorption process, and the pre-adsorber 3 is the waiting stage in the pre-adsorption process. After drying with the first adsorber 1, all product hydrogen is adjusted through the self-operated pressure adjusting valve 91 to obtain the pressure of P1 MPa and then output, so as to achieve that the adsorption operating flow of the first adsorber 1 is adjustable within the range of 0-100%; and the second adsorber 2 is the waiting stage in the desorption process, the pre-adsorber 3 is the waiting stage in the pre-adsorption process, the hydrogen self-circulation apparatus 4 and the desorption heater 5 are stopped, the valves remain in original positions, and the waiting duration is W5.

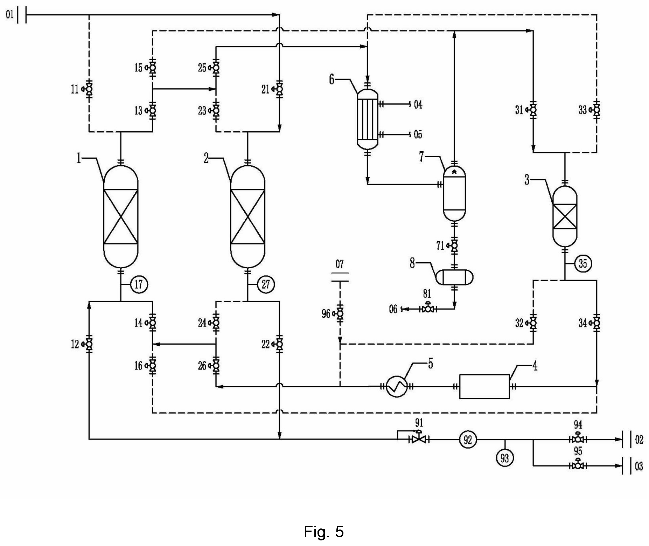

As shown in Fig. 5, in the A2D1 state, the second adsorber 2 is the adsorption process, hydrogen enters the second adsorber 2 through the second adsorption intake automatic valve 21 from the raw hydrogen inlet 01 for adsorption drying, the dried hydrogen flows out from the second adsorption exhaust automatic valve 22, and most of the product hydrogen is adjusted through the self-operated pressure adjusting valve 91 to obtain the pressure of P1 MPa and then output, so as to achieve that the adsorption operating flow of the second adsorber 2 is adjustable within a range of 0-100%; the first adsorber 1 is the pressurization stage in the desorption process, and the pre-adsorber 3 is the pressurization stage in the pre-adsorption process; the pressurization manner is divided into internal pressurization and external pressurization, and in some embodiments, is the internal pressurization. When hydrogen is input from the raw hydrogen inlet 01, that is, the instantaneous flow of the hydrogen flowmeter 92 at the outlet of the adsorber is not 0, a small portion of the product hydrogen output from the second adsorber 2 as an internal pressurization gas source is pressurized through the first adsorption exhaust automatic valve 12, the first adsorber 1, the first desorption exhaust automatic valve 13, the adsorber desorption exhaust automatic switching valve 25, the desorption cooler 6, the desorption gas-water separator 7, the pre-adsorption intake automatic switching valve 31, the pre-adsorber 3, the pre-adsorption exhaust automatic switching valve 34, the hydrogen self-circulation apparatus 4, the desorption heater 5, the adsorber desorption intake automatic switching valve 26, the first desorption intake automatic valve 14 and connected pipelines until the pressure of the third pressure transmitter 35 at the outlet of the pre-adsorber 3 reaches P1 MPa; and when no hydrogen is input from the raw hydrogen inlet 01, that is, the instantaneous flow of the hydrogen flowmeter 92 at the outlet of the adsorber is 0, internal pressurization can be selected during hydrogen input of the second adsorber 2 and the valves remain in original positions, or external pressurization can be selected, the first adsorption exhaust automatic valve 12 of the first adsorber 1 is closed, and external high-purity hydrogen or high-purity nitrogen input through the external pressurization automatic valve 96 from the external pressurization inlet 07 is pressurized through the adsorber desorption intake automatic switching valve 26, the first desorption intake automatic valve 14, the first adsorber 1, the first desorption exhaust automatic valve 13, the adsorber desorption exhaust automatic switching valve 25, the desorption cooler 6, the desorption gas-water separator 7, the pre-adsorption intake automatic switching valve 31, the pre-adsorber 3, the pre-adsorption exhaust automatic switching valve 34, the hydrogen self-circulation apparatus 4, the desorption heater 5 and internally connected pipelines until the pressure of the third pressure transmitter 35 at the outlet of the pre-adsorber 3 reaches P1 MPa.

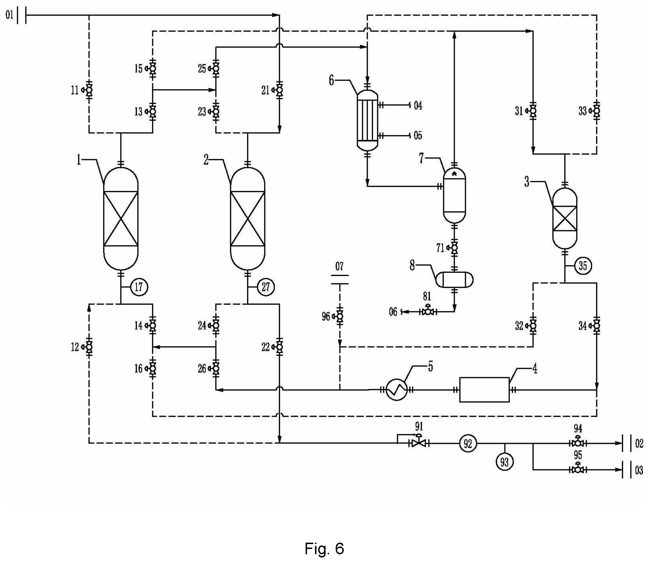

As shown in Fig. 6, in the A2D2 state, the second adsorber 2 is the adsorption process, the first adsorber 1 is the desorption stage in the desorption process, and the pre-adsorber 3 is the pre-adsorption stage in the pre-adsorption process. After drying with the second adsorber 2, all product hydrogen is adjusted through the self-operated pressure adjusting valve 91 to obtain a pressure of P1 MPa and then output, so as to achieve that the adsorption operating flow of the second adsorber 2 is adjustable within a range of 0-100%; the first adsorber 1 is the desorption stage in the desorption process, the pre-adsorber 3 is the pre-adsorption stage in the pre-adsorption process, and the hydrogen self-circulation apparatus 4 and the desorption heater 5 are started; the gas with the pressure of P1 MPa in the pre-adsorber 3 passes through the pre-adsorption exhaust automatic switching valve 34, the hydrogen self-circulation apparatus 4 and the desorption heater 5, then passes through the adsorber desorption intake automatic switching valve 26 and the first desorption intake automatic valve 14 to enter the first adsorber 1 for heating desorption of the internal adsorbent, and finally passes through the first desorption exhaust automatic valve 13, the adsorber desorption exhaust automatic switching valve 25, the desorption cooler 6 for cooling and the desorption gas-water separator 7 for gas-water separation to self-circulate to the pre-adsorber 3, and a self-circulation duration is W2, so as to achieve that the adsorption process of the second adsorber 2 is independent of the desorption process of the first adsorber 1; and within the range of 0-100% of the adsorption operating flow of the second adsorber 2, the first adsorber 1 still can complete regeneration.

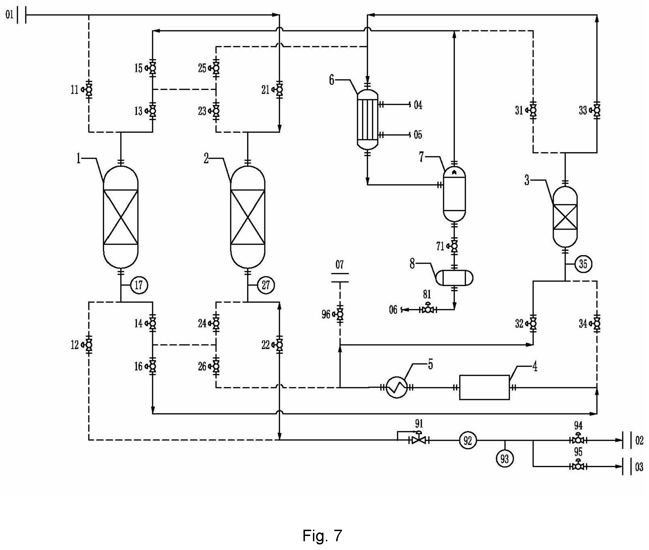

As shown in Fig. 7, in the A2D3 state, the second adsorber 2 is the adsorption process, the first adsorber 1 is the adsorption stage in the desorption process, and the pre-adsorber 3 is the desorption stage in the pre-adsorption process. After drying with the second adsorber 2, all product hydrogen is adjusted through the self-operated pressure adjusting valve 91 to obtain the pressure of P1 MPa and then output, so as to achieve that the adsorption operating flow of the second adsorber 2 is adjustable within the range of 0-100%; the first adsorber 1 is the adsorption stage in the desorption process, the pre-adsorber 3 is the desorption stage in the pre-adsorption process, and the hydrogen self-circulation apparatus 4 and the desorption heater 5 operate; the gas with the pressure of P1 MPa in the first adsorber 1 passes through the first desorption intake automatic valve 14, the pre-adsorption exhaust automatic valve 16, the hydrogen self-circulation apparatus 4 and the desorption heater 5 for heating, then passes through the desorption intake automatic switching valve 32 to enter the pre-adsorber 3 for heating desorption of the internal adsorbent, and finally passes through the desorption exhaust automatic switching valve 33, the desorption cooler 6 for cooling and the desorption gas-water separator 7 for gas-water separation and then passes through the pre-adsorption intake automatic valve 15 and the first desorption exhaust automatic valve 13 to self-circulate to the first adsorber 1, and a self-circulation duration is W3, so as to achieve that the adsorption process of the second adsorber 2 is independent of the desorption process of the pre-adsorber 3; and within the range of 0-100% of the adsorption operating flow of the second adsorber 2, the pre-adsorber 3 still can complete regeneration.

In the A2D4 state, referring to Fig. 6 and Fig. 7, the second adsorber 2 is the adsorption process, the first adsorber 1 is the pressure replenishment stage in the desorption process, and the pre-adsorber 3 is the pressure replenishment stage in the pre-adsorption process. After drying with the second adsorber 2, all product hydrogen is adjusted through the self-operated pressure adjusting valve 91 to obtain the pressure of P1 MPa and then output, so as to achieve that the adsorption operating flow of the second adsorber 2 is adjustable within a range of 0-100%; the first adsorber 1 is the pressure replenishment stage in the desorption process, and the pre-adsorber 3 is the pressure replenishment stage in the pre-adsorption process; at the D2 and D3 stages, if the feedback pressure of the third pressure transmitter 35 is lower than P2 MPa, the hydrogen self-circulation apparatus 4 and the desorption heater 5 are closed, a timing of a corresponding stage is stopped, the first adsorption exhaust automatic valve 12 or the external pressurization automatic valve 96 is opened for pressure replenishment, and other valves remain in original positions; and after the pressure is replenished until the feedback pressure of the third pressure transmitter 35 reaches P1 MPa, the first adsorption exhaust automatic valve 12 or the external pressurization automatic valve 96 is closed, and the hydrogen self-circulation apparatus 4 and the desorption heater 5 are automatically started to continue operating.

In the A2D5 state, referring to Fig. 7, in some embodiments, the second adsorber 2 is the adsorption process, the first adsorber 1 is the waiting stage in the desorption process, and the pre-adsorber 3 is the waiting stage in the pre-adsorption process. After drying with the second adsorber 2, all product hydrogen is adjusted through the self-operated pressure adjusting valve 91 to obtain a pressure of P1 MPa and then output, so as to achieve that the adsorption operating flow of the second adsorber 2 is adjustable within a range of 0-100%; and the first adsorber 1 is the waiting stage in the desorption process, the pre-adsorber 3 is the waiting stage in the pre-adsorption process, the hydrogen self-circulation apparatus 4 and the desorption heater 5 are stopped, the valves remain in original positions, and the waiting duration is W5.

In some embodiments of this solution, the adsorption process is independent of the desorption process, so the flow of the raw hydrogen entering the adsorber does not affect the desorption process. The gas with the pressure of P1 MPa in the pre-adsorber 3 and the adsorber in the desorption process is circulated through the hydrogen self-circulation apparatus 4 to perform desorption, thereby effectively solving the impact of the flow fluctuation or interruption of the raw hydrogen on the desorption effect. The intermittent and fluctuating renewable energy is matched particularly to perform hydrogen production, thereby meeting the requirement of 0-100% of the device operating load.

In an existing technology, in order to solve the problem of difficulty in meeting the regeneration flow demand due to the fluctuation of hydrogen production using renewable energy, different stages of variable-flow regeneration desorption are adopted. However, during the intermittent operation of hydrogen production using renewable energy at the front end, there may be no raw hydrogen available for regeneration desorption, resulting in incomplete desorption and affecting the adsorption effect in the next cycle. A drying apparatus still has a minimum regeneration flow demand, and once the regeneration flow continues to be below the lower limit, it may also cause incomplete desorption. Even if the hydrogen in a hydrogen storage region is introduced for regeneration and stored in a high-pressure hydrogen compressor to return the hydrogen back to the hydrogen storage region, it may also cause the hydrogen to be reduced from a high pressure to a low pressure and then compressed to a high pressure, so the compression ratio of the compressor is relatively large, resulting in relatively high overall energy consumption of the system. Therefore, this technology cannot achieve 0-100% of the operating load and thus is difficult to meet the intermittent requirement in hydrogen production using renewable energy.

In another existing technology, a plurality of purifying and drying units are used in parallel to solve the problem of difficulty in meeting the regeneration flow demand due to the fluctuation of hydrogen production using renewable energy. However, the number of drying units is too large, and the problem of flow distribution of each drying unit also needs to be considered. The device cost is relatively high, a drying apparatus still has a minimum regeneration flow demand, 0-100% of the operating load cannot be achieved, and thus it is difficult to meet the intermittent requirement in hydrogen production using renewable energy.

In some embodiments of the present disclosure, an intelligent control manner is adopted, and the control system switches an operating state by means of accumulating the single hydrogen adsorption capacity of the adsorber, thereby effectively avoiding the heating desorption before adsorption saturation of the adsorber, maximizing the adsorption ability of the adsorber, reducing the heating desorption frequency, and reducing the energy consumption.

In the innovative process flow design of this disclosure, the adsorption process is independent of the desorption process, and the raw gas enters the adsorber for adsorption and then is completely output to a drying apparatus. In the desorption process, the hydrogen in the adsorber in the desorption process or the pre-adsorber is circulated through the hydrogen self-circulation apparatus to achieve regeneration, so that the problem of incomplete desorption due to desorption interruption caused by the flow fluctuation of the raw hydrogen is effectively solved, and particularly matched for the intermittent and fluctuating requirements in hydrogen production using renewable energy. The operation of the hydrogen drying apparatus meets the requirement of 0-100% of the load in hydrogen production using renewable energy.

The hydrogen self-circulation apparatus does not affect the purity of the hydrogen after circulation. The self-circulation apparatus includes at least one set of self-circulation unit. When the operating flow of a single set of self-circulation unit is limited and cannot meet the desorption flow demand, multiple sets of units can operate in parallel. The outlet non-return valve of the each set of unit can effectively prevent the backflow of hot gas in the desorption heater from affecting the service life of the self-circulation device.

Based on the above characteristics, in this disclosure, the design of the hydrogen drying apparatus is optimized, and scenarios of hydrogen production using the intermittent and fluctuating renewable energy are particularly matched, thereby meeting the requirement of 0-100% of the device operating load.

The above hydrogen drying system for hydrogen production using renewable energy is used for drying all hydrogen produced under intermittent or fluctuating operating conditions of renewable energy, that is, the hydrogen drying system can have an ability to start and stop at any time according to the characteristics of the renewable energy, so as to achieve that an adsorber obtains pure hydrogen within an operating flow range of 0-100%. A regeneration adsorber and a regeneration pre-adsorber still can independently complete regeneration within an operating flow range of 0-100%, thereby ensuring complete regeneration and achieving an adsorption ability after adsorber desorption switching at any time.

The above descriptions are some embodiments of this disclosure, but are not intended to limit this disclosure. For those skilled in the art, this disclosure may have various modifications and changes. Any modification, equivalent replacement, improvement, and the like made within the spirit and principle of this disclosure shall fall within the scope of protection of this disclosure.

## Claims

1. A hydrogen drying system for hydrogen production using renewable energy, comprising two adsorbers, a pre-adsorber (3), a hydrogen self-circulation apparatus (4), a desorption heater (5), a desorption cooler (6) and a desorption gas-water separator (7), wherein the two adsorbers are arranged in parallel, the two adsorbers alternately perform an adsorption process and a desorption process, an adsorption flow of each of the two adsorbers changes along with fluctuations of input renewable energy, and an operating state of the each of the two adsorbers is switched by means of accumulating a hydrogen flow treated by the each of the two adsorbers in a single adsorption process; the pre-adsorber (3) is connected in series to one of the two adsorbers and is used for assisting in the desorption process; in the desorption process, hydrogen in the pre-adsorber (3) or the one of the two adsorbers is circulated through the hydrogen self-circulation apparatus (4), the desorption process is independent of the adsorption process, and after the adsorption process is completed, dried hydrogen is directly output; the desorption heater (5) is connected to an outlet of the hydrogen self-circulation apparatus (4) to heat a hydrogen output from the hydrogen self-circulation apparatus (4); and an inlet of the desorption cooler (6) is connected to the each of the two adsorbers or the pre-adsorber (3) and an outlet of the desorption cooler (6) is connected to the desorption gas-water separator (7) to condense water vapor carried in hydrogen in the desorption process, hydrogen and liquid water are separated by the desorption gas-water separator (7), and a hydrogen outlet of the desorption gas-water separator (7) is connected to the each of the two adsorbers or the pre-adsorber (3).

2. The hydrogen drying system for hydrogen production using renewable energy according to claim 1, wherein the two adsorbers are respectively a first adsorber (1) and a second adsorber (2), an inlet of the first adsorber (1) is connected to a raw hydrogen inlet (01) through a first adsorption intake automatic valve (11), the inlet of the first adsorber (1) is connected to the pre-adsorber (3) through a first desorption exhaust automatic valve (13) and a pre-adsorption intake automatic valve (15) arranged sequentially, an outlet of the first adsorber (1) is connected with a first adsorption exhaust automatic valve (12) for discharging hydrogen, and the outlet of the first adsorber (1) is connected to the hydrogen self-circulation apparatus (4) and the pre-adsorber (3) through a first desorption intake automatic valve (14) and a first pre-adsorption exhaust automatic valve (16) arranged sequentially; an inlet of the second adsorber (2) is connected to the raw hydrogen inlet (01) through a second adsorption intake automatic valve (21), the inlet of the second adsorber (2) is connected to the desorption cooler (6) through a second desorption exhaust automatic valve (23) and an adsorber desorption exhaust automatic switching valve (25) arranged sequentially, an outlet of the second adsorber (2) is connected with a second adsorption exhaust automatic valve (22) for discharging hydrogen, and the outlet of the second adsorber (2) is connected to the desorption heater (5) through a second desorption intake automatic valve (24) and an adsorber desorption intake automatic switching valve (26) arranged sequentially; the two adsorbers share one pre-adsorption intake automatic valve (15), one pre-adsorption exhaust automatic valve (16), one adsorber desorption intake automatic switching valve (26) and one adsorber desorption exhaust automatic switching valve (25); and the outlet of the first adsorber (1) is connected to a first pressure transmitter (17), and the outlet of the second adsorber (2) is connected to a second pressure transmitter (27).

3. The hydrogen drying system for hydrogen production using renewable energy according to claim 2, wherein an inlet of the pre-adsorber (3) is connected to the pre-adsorption intake automatic valve (15) through a pre-adsorption intake automatic switching valve (31), the inlet of the pre-adsorber (3) is connected to the desorption cooler (6) through a desorption exhaust automatic switching valve (33), an outlet of the pre-adsorber (3) is connected to an external pressurization inlet (07) through a desorption intake automatic switching valve (32), the outlet of the pre-adsorber (3) is connected to the hydrogen self-circulation apparatus (4) and the pre-adsorption exhaust automatic valve (16) through a pre-adsorption exhaust automatic switching valve (34), and the outlet of the pre-adsorber (3) is connected to a third pressure transmitter (35).

4. The hydrogen drying system for hydrogen production using renewable energy according to claim 1, wherein an inlet of the hydrogen self-circulation apparatus (4) is connected to the pre-adsorber (3) or the each of the two adsorbers, the hydrogen self-circulation apparatus (4) comprises multiple sets of self-circulation units, and when an operating flow of a single set of the self-circulation unit does not meet a desorption flow demand, the multiple sets of the self-circulation units operate in parallel; and each set of the self-circulation unit comprises a self-circulation inlet shut-off valve, a self-circulation device, a self-circulation outlet non-return valve and a self-circulation outlet shut-off valve connected sequentially.

5. The hydrogen drying system for hydrogen production using renewable energy according to claim 1, wherein the hydrogen drying system for hydrogen production using renewable energy further comprises a raw hydrogen inlet (01), a product hydrogen outlet (02), a hydrogen vent (03), a cooling water outlet (04), a cooling water inlet (05), a drain outlet (06), an external pressurization inlet (07) and a water collector (8), wherein the raw hydrogen inlet (01) is connected to an inlet of each of the two adsorbers, the product hydrogen outlet (02) is connected to an outlet of the each of the two adsorbers through a product hydrogen automatic valve (94), the hydrogen vent (03) is connected to the outlet of the each of the two adsorbers through a hydrogen venting automatic valve (95), a self-operated pressure adjusting valve (91), a hydrogen flowmeter (92) and a hydrogen dew point instrument (93) are arranged on a pipeline where the each of the two adsorbers is connected to the product hydrogen outlet (02), the cooling water inlet (05) and the cooling water outlet (04) are both connected to the desorption cooler (6), the external pressurization inlet (07) is connected to the two adsorbers and the pre-adsorber (3) through an external pressurization automatic valve (96), a liquid outlet of the desorption gas-water separator (7) is connected to an inlet of the water collector (8) through a liquid outlet automatic valve (71), and an outlet of the water collector (8) is connected to the drain outlet (06) through a drain automatic valve (81).

6. The hydrogen drying system for hydrogen production using renewable energy according to claim 1, wherein the desorption process comprises a pressurization stage, a desorption stage, a pre-adsorption stage, a waiting stage and a pressure replenishment stage, and a pre-adsorption process of the pre-adsorber (3) comprises a pressurization stage, a pre-adsorption stage, a desorption stage, a pressure replenishment stage and a waiting stage; the two adsorbers are respectively a first adsorber (1) and a second adsorber (2), the first adsorber (1) is an adsorption process A1, and the second adsorber (2) is a desorption process D, forming an A1D state; the second adsorber (2) is an adsorption process A2, and the first adsorber (1) is a desorption process D, forming an A2D state; the pressurization stage of each of the two adsorbers corresponds to the pressurization stage of the pre-adsorber (3), forming a D1 stage; the desorption stage of the each of the two adsorbers corresponds to the adsorption stage of the pre-adsorber (3), forming a D2 stage; the pre-adsorption stage of the each of the two adsorbers corresponds to the desorption stage of the pre-adsorber (3), forming a D3 stage; the pressure replenishment stage of the each of the adsorbers corresponds to the pressure replenishment stage of the pre-adsorber (3), forming a D4 stage; the waiting stage of the each of the two adsorbers corresponds to the waiting stage of the pre-adsorber (3), forming a D5 stage; and operating state combinations of the two adsorbers and the pre-adsorber (3) are divided into A1D1, A1D2, A1D3, A1D4, A1D5, A2D1, A2D2, A2D3, A2D4 and A2D5 states, and the switching between the states is achieved by switching state changes of a plurality of automatic valves.

7. The hydrogen drying system for hydrogen production using renewable energy according to claim 6, wherein a rated hydrogen adsorption capacity of the each of the adsorbers per hour is X1 Nm³, a rated adsorption time is N hours, and a single hydrogen adsorption capacity of the each of the two adsorbers is Y1=N*X1 Nm³; an initial cumulative flow of the hydrogen flowmeter (92) at an outlet of the each of the adsorbers at the beginning of single adsorption is Y0 Nm³, and an actual adsorption hydrogen flow of the each of the adsorbers is 0-100% of the rated value; and when a cumulative flow of the hydrogen flowmeter (92) at the outlet of the each of the adsorbers reaches Y2 Nm³, Y2=Y0+Y1, and the adsorption process is automatically switched to the desorption process, that is, the A1D is switched to the A2D or the A2D is switched to the A1D.

8. The hydrogen drying system for hydrogen production using renewable energy according to claim 7, wherein the D1 to D3 stages are performed in sequence, and a total duration of the desorption process is W; at the D1 stage, pressurization is performed in one of the two adsorbers that is in the desorption process and the pre-adsorber (3), a feedback pressure of a third pressure transmitter (35) at an outlet of the pre-adsorber (3) reaches P1 MPa, and a duration of the D1 stage is W1 and is not a constant value; the hydrogen self-circulation apparatus (4) and the desorption heater (5) are started, a self-circulation hydrogen capacity is X2 Nm³/h, an adsorbent in the pre-adsorber (3) is pre-adsorbed, an adsorbent in the adsorber in the desorption process is desorbed, and a duration of the D2 stage is W2 and is a constant value; after the D2 stage is completed, the D3 stage is performed, the hydrogen self-circulation apparatus (4) and the desorption heater (5) continue to operate, the self-circulation hydrogen capacity is still X2 Nm³/h, the adsorbent in the adsorber in the desorption process is pre-adsorbed, the adsorbent in the pre-adsorber (3) is desorbed, and a duration of the D3 stage is W3 and is a constant value; after the D3 stage is completed, the D5 stage is performed, the hydrogen self-circulation apparatus (4) and the desorption heater (5) are stopped, the adsorber in the desorption process and the pre-adsorber (3) are both waiting, and a duration of the D5 stage is W5 and is not a constant value; at the D2 and D3 stages, if the feedback pressure of the third pressure transmitter (35) at the outlet of the pre-adsorber (3) is lower than P2 MPa, the hydrogen self-circulation apparatus (4) and the desorption heater (5) are closed, and a timing of a corresponding stage is stopped; the D4 stage is performed, and a duration of the D4 stage is W4 and is not a constant value; after a pressure is replenished until the feedback pressure of the third pressure transmitter (35) reaches P1 MPa, the hydrogen self-circulation apparatus (4) and the desorption heater (5) are automatically started to continue an operation of the corresponding stage; and an actual single adsorption time of one of the two adsorbers that is in the adsorption process is Z, wherein Z=W, Z-W5=W1+W2+W3+W4≤N, 0<P2<P1, and 0<X2≤X1.

9. The hydrogen drying system for hydrogen production using renewable energy according to claim 8, wherein adsorbents in the first adsorber (1) and the second adsorber (2) are filled according to a single hydrogen adsorption capacity Y1, an adsorbent in the pre-adsorber (3) is filled according to a single hydrogen pre-adsorption capacity Y3=W2*X2 Nm³, and effective volumes of the first adsorber (1) and the second adsorber (2) are greater than an effective volume of the pre-adsorber (3).

10. The hydrogen drying system for hydrogen production using renewable energy according to claim 6, wherein a liquid outlet of the desorption gas-water separator (7) is connected to an inlet of the water collector (8) through a liquid outlet automatic valve (71), an outlet of the water collector (8) is connected to a drain outlet (06) through a drain automatic valve (81), an effective volume of the water collector (8) is V, and a total water volume in single absorption of Y1 Nm³ of hydrogen by the adsorber is V1, wherein V1=1/2V; when one of the two adsorbers that is in the desorption process and the pre-adsorber (3) just enter the D5 stage, the drain automatic valve (81) is opened, and each drain time is T1; and the liquid outlet automatic valve (71) is in a normally open state, T2 time before the drain automatic valve (81) is opened, the liquid outlet automatic valve (71) is closed, and after the drain automatic valve (81) has been closed for a period of T2, the liquid outlet automatic valve (71) is opened.

11. The hydrogen drying system for hydrogen production using renewable energy according to claim 6, wherein in the A1D1 state, the first adsorber (1) is the adsorption process, hydrogen enters the first adsorber (1) through a first adsorption intake automatic valve (11) from a raw hydrogen inlet (01) for adsorption drying, a dried hydrogen flows out from a first adsorption exhaust automatic valve (12), and most of the product hydrogen is adjusted through a self-operated pressure adjusting valve (91) to obtain a pressure of P1 MPa and then output, so as to achieve that an adsorption operating flow of the first adsorber (1) is adjustable within a range of 0-100%; the second adsorber (2) is the pressurization stage in the desorption process, and the pre-adsorber (3) is the pressurization stage in the pre-adsorption process; when hydrogen is input from the raw hydrogen inlet (01), a small portion of the product hydrogen output from the first adsorber (1) is pressurized through a second adsorption exhaust automatic valve (22), the second adsorber (2), a second desorption exhaust automatic valve (23), an adsorber desorption exhaust automatic switching valve (25), the desorption cooler (6), the desorption gas-water separator (7), a pre-adsorption intake automatic switching valve (31), the pre-adsorber (3), a pre-adsorption exhaust automatic switching valve (34), the hydrogen self-circulation apparatus (4), the desorption heater (5), an adsorber desorption intake automatic switching valve (26), a second desorption intake automatic valve (24) and connected pipelines until a pressure of a third pressure transmitter (35) at an outlet of the pre-adsorber (3) reaches P1 MPa; and when no hydrogen is input from the raw hydrogen inlet (01), internal pressurization can be selected during hydrogen input of the first adsorber (1) and the valves remain in original positions, or external pressurization can be selected, a second adsorption exhaust automatic valve (22) of the second adsorber (2) is closed, and external high-purity hydrogen or high-purity nitrogen input through an external pressurization automatic valve (96) from an external pressurization inlet (07) is pressurized through the adsorber desorption intake automatic switching valve (26), the second desorption intake automatic valve (24), the second adsorber (2), the second desorption exhaust automatic valve (23), the adsorber desorption exhaust automatic switching valve (25), the desorption cooler (6), the desorption gas-water separator (7), the pre-adsorption intake automatic switching valve (31), the pre-adsorber (3), the pre-adsorption exhaust automatic switching valve (34), the hydrogen self-circulation apparatus (4), the desorption heater (5) and internally connected pipelines until the pressure of the third pressure transmitter (35) at the outlet of the pre-adsorber (3) reaches P1 MPa.

12. The hydrogen drying system for hydrogen production using renewable energy according to claim 11, wherein in the A1D2 state, after drying with the first adsorber (1), all product hydrogen is adjusted through the self-operated pressure adjusting valve (91) to obtain the pressure of P1 MPa and then output, so as to achieve that the adsorption operating flow of the first adsorber (1) is adjustable within the range of 0-100%; the second adsorber (2) is the desorption stage in the desorption process, the pre-adsorber (3) is the pre-adsorption stage in the pre-adsorption process, and the hydrogen self-circulation apparatus (4) and the desorption heater (5) are started; a gas with the pressure of P1 MPa in the pre-adsorber (3) passes through the pre-adsorption exhaust automatic switching valve (34), the hydrogen self-circulation apparatus (4) and the desorption heater (5), then passes through the adsorber desorption intake automatic switching valve (26) and the second desorption intake automatic valve (24) to enter the second adsorber (2) for heating desorption of an internal adsorbent, and finally passes through the second desorption exhaust automatic valve (23), the adsorber desorption exhaust automatic switching valve (25), the desorption cooler (6) for cooling and the desorption gas-water separator (7) for gas-water separation to self-circulate to the pre-adsorber (3), and a self-circulation duration is W2, so as to achieve that the adsorption process of the first adsorber (1) is independent of the desorption process of the second adsorber (2); and within the range of 0-100% of the adsorption operating flow of the first adsorber (1), the second adsorber (2) still can complete regeneration.

13. The hydrogen drying system for hydrogen production using renewable energy according to claim 11, wherein in the A1D3 state, after drying with the first adsorber (1), all product hydrogen is adjusted through the self-operated pressure adjusting valve (91) to obtain the pressure of P1 MPa and then output, so as to achieve that the adsorption operating flow of the first adsorber (1) is adjustable within the range of 0-100%; the second adsorber (2) is the adsorption stage in the desorption process, the pre-adsorber (3) is the desorption stage in the pre-adsorption process, and the hydrogen self-circulation apparatus (4) and the desorption heater (5) operate; a gas with the pressure of P1 MPa in the second adsorber (2) passes through the second desorption intake automatic valve (24), the pre-adsorption exhaust automatic valve (16), the hydrogen self-circulation apparatus (4) and the desorption heater (5) for heating, then passes through the desorption intake automatic switching valve (32) to enter the pre-adsorber (3) for heating desorption of an internal adsorbent, and finally passes through the desorption exhaust automatic switching valve (33), the desorption cooler (6) for cooling and the desorption gas-water separator (7) for gas-water separation and then passes through the pre-adsorption intake automatic valve (15) and the second desorption exhaust automatic valve (23) to self-circulate to the second adsorber (2), and a self-circulation duration is W3, so as to achieve that the adsorption process of the first adsorber (1) is independent of the desorption process of the pre-adsorber (3); and within the range of 0-100% of the adsorption operating flow of the first adsorber (1), the pre-adsorber (3) still can complete regeneration.

14. The hydrogen drying system for hydrogen production using renewable energy according to claim 11, wherein in the A1D4 state, after drying with the first adsorber (1), all product hydrogen is adjusted through the self-operated pressure adjusting valve (91) to obtain the pressure of P1 MPa and then output, so as to achieve that the adsorption operating flow of the first adsorber (1) is adjustable within the range of 0-100%; the second adsorber (2) is the pressure replenishment stage in the desorption process, and the pre-adsorber (3) is the pressure replenishment stage in the pre-adsorption process; at the D2 and D3 stages, if the feedback pressure of the third pressure transmitter (35) is lower than P2 MPa, the hydrogen self-circulation apparatus (4) and the desorption heater (5) are closed, a timing of a corresponding stage is stopped, the second adsorption exhaust automatic valve (22) or the external pressurization automatic valve (96) is opened for pressure replenishment, and other valves remain in original positions; and after the pressure is replenished until the feedback pressure of the third pressure transmitter (35) reaches P1 MPa, the second adsorption exhaust automatic valve (22) or the external pressurization automatic valve (96) is closed, and the hydrogen self-circulation apparatus (4) and the desorption heater (5) are automatically started to continue operating.

15. The hydrogen drying system for hydrogen production using renewable energy according to claim 11, wherein in the A1D5 state, after drying with the first adsorber (1), all product hydrogen is adjusted through the self-operated pressure adjusting valve (91) to obtain the pressure of P1 MPa and then output, so as to achieve that the adsorption operating flow of the first adsorber (1) is adjustable within the range of 0-100%; and the second adsorber (2) is the waiting stage in the desorption process, the pre-adsorber (3) is the waiting stage in the pre-adsorption process, the hydrogen self-circulation apparatus (4) and the desorption heater (5) are stopped, valves remain in original positions, and a waiting duration is W5.

16. The hydrogen drying system for hydrogen production using renewable energy according to claim 6, wherein in the A2D1 state, the second adsorber (2) is the adsorption process, hydrogen enters the second adsorber (2) through a second adsorption intake automatic valve (21) from a raw hydrogen inlet (01) for adsorption drying, a dried hydrogen flows out from a second adsorption exhaust automatic valve (22), and most of the product hydrogen is adjusted through a self-operated pressure adjusting valve (91) to obtain a pressure of P1 MPa and then output, so as to achieve that an adsorption operating flow of the second adsorber (2) is adjustable within a range of 0-100%; the first adsorber (1) is the pressurization stage in the desorption process, and the pre-adsorber (3) is the pressurization stage in the pre-adsorption process; when hydrogen is input from the raw hydrogen inlet (01), a small portion of the product hydrogen output from the second adsorber (2) is pressurized through a first adsorption exhaust automatic valve (12), the first adsorber (1), a first desorption exhaust automatic valve (13), an adsorber desorption exhaust automatic switching valve (25), the desorption cooler (6), the desorption gas-water separator (7), a pre-adsorption intake automatic switching valve (31), the pre-adsorber (3), a pre-adsorption exhaust automatic switching valve (34), the hydrogen self-circulation apparatus (4), the desorption heater (5), an adsorber desorption intake automatic switching valve (26), a first desorption intake automatic valve (14) and connected pipelines until a pressure of a third pressure transmitter (35) at an outlet of the pre-adsorber (3) reaches P1 MPa; and when no hydrogen is input from the raw hydrogen inlet (01), internal pressurization can be selected during hydrogen input of the second adsorber (2) and the valves remain in original positions, or external pressurization can be selected, a first adsorption exhaust automatic valve (12) of the first adsorber (1) is closed, and external high-purity hydrogen or high-purity nitrogen input through an external pressurization automatic valve (96) from an external pressurization inlet (07) is pressurized through an adsorber desorption intake automatic switching valve (26), the first desorption intake automatic valve (14), the first adsorber (1), the first desorption exhaust automatic valve (13), the adsorber desorption exhaust automatic switching valve (25), the desorption cooler (6), the desorption gas-water separator (7), the pre-adsorption intake automatic switching valve (31), the pre-adsorber (3), the pre-adsorption exhaust automatic switching valve (34), the hydrogen self-circulation apparatus (4), the desorption heater (5) and internally connected pipelines until a pressure of a third pressure transmitter (35) at an outlet of the pre-adsorber (3) reaches P1 MPa.

17. The hydrogen drying system for hydrogen production using renewable energy according to claim 16, wherein in the A2D2 state, after drying with the second adsorber (2), all product hydrogen is adjusted through the self-operated pressure adjusting valve (91) to obtain the pressure of P1 MPa and then output, so as to achieve that the adsorption operating flow of the second adsorber (2) is adjustable within the range of 0-100%; the first adsorber (1) is the desorption stage in the desorption process, the pre-adsorber (3) is the pre-adsorption stage in the pre-adsorption process, and the hydrogen self-circulation apparatus (4) and the desorption heater (5) are started; a gas with the pressure of P1 MPa in the pre-adsorber (3) passes through the pre-adsorption exhaust automatic switching valve (34), the hydrogen self-circulation apparatus (4) and the desorption heater (5), then passes through the adsorber desorption intake automatic switching valve (26) and the first desorption intake automatic valve (14) to enter the first adsorber (1) for heating desorption of an internal adsorbent, and finally passes through the first desorption exhaust automatic valve (13), the adsorber desorption exhaust automatic switching valve (25), the desorption cooler (6) for cooling and the desorption gas-water separator (7) for gas-water separation to self-circulate to the pre-adsorber (3), and a self-circulation duration is W2, so as to achieve that the adsorption process of the second adsorber (2) is independent of the desorption process of the first adsorber (1); and within the range of 0-100% of the adsorption operating flow of the second adsorber (2), the first adsorber (1) still can complete regeneration.

18. The hydrogen drying system for hydrogen production using renewable energy according to claim 16, wherein in the A2D3 state, after drying with the second adsorber (2), all product hydrogen is adjusted through the self-operated pressure adjusting valve (91) to obtain the pressure of P1 MPa and then output, so as to achieve that the adsorption operating flow of the second adsorber (2) is adjustable within the range of 0-100%; the first adsorber (1) is the adsorption stage in the desorption process, the pre-adsorber (3) is the desorption stage in the pre-adsorption process, and the hydrogen self-circulation apparatus (4) and the desorption heater (5) operate; a gas with the pressure of P1 MPa in the first adsorber (1) passes through the first desorption intake automatic valve (14), a pre-adsorption exhaust automatic valve (16), the hydrogen self-circulation apparatus (4) and the desorption heater (5) for heating, then passes through a desorption intake automatic switching valve (32) to enter the pre-adsorber (3) for heating desorption of an internal adsorbent, and finally passes through a desorption exhaust automatic switching valve (33), the desorption cooler (6) for cooling and the desorption gas-water separator (7) for gas-water separation and then passes through the pre-adsorption intake automatic valve (15) and the first desorption exhaust automatic valve (13) to self-circulate to the first adsorber (1), and a self-circulation duration is W3, so as to achieve that the adsorption process of the second adsorber (2) is independent of the desorption process of the pre-adsorber (3); and within the range of 0-100% of the adsorption operating flow of the second adsorber (2), the pre-adsorber (3) still can complete regeneration.

19. The hydrogen drying system for hydrogen production using renewable energy according to claim 16, wherein in the A2D4 state, after drying with the second adsorber (2), all product hydrogen is adjusted through the self-operated pressure adjusting valve (91) to obtain the pressure of P1 MPa and then output, so as to achieve that the adsorption operating flow of the second adsorber (2) is adjustable within the range of 0-100%; the first adsorber (1) is the pressure replenishment stage in the desorption process, and the pre-adsorber (3) is the pressure replenishment stage in the pre-adsorption process; at the D2 and D3 stages, if a feedback pressure of the third pressure transmitter (35) is lower than P2 MPa, the hydrogen self-circulation apparatus (4) and the desorption heater (5) are closed, a timing of a corresponding stage is stopped, the first adsorption exhaust automatic valve (12) or the external pressurization automatic valve (96) is opened for pressure replenishment, and other valves remain in original positions; and after the pressure is replenished until the feedback pressure of the third pressure transmitter (35) reaches P1 MPa, the first adsorption exhaust automatic valve (12) or the external pressurization automatic valve (96) is closed, and the hydrogen self-circulation apparatus (4) and the desorption heater (5) are automatically started to continue operating.

20. The hydrogen drying system for hydrogen production using renewable energy according to claim 16, wherein in the A2D5 state, after drying with the second adsorber (2), all product hydrogen is adjusted through the self-operated pressure adjusting valve (91) to obtain the pressure of P1 MPa and then output, so as to achieve that the adsorption operating flow of the second adsorber (2) is adjustable within the range of 0-100%; and the first adsorber (1) is the waiting stage in the desorption process, the pre-adsorber (3) is the waiting stage in the pre-adsorption process, the hydrogen self-circulation apparatus (4) and the desorption heater (5) are stopped, valves remain in original positions, and a waiting duration is W5.
